# EUROPEAN PATENT APPLICATION

(11) **EP 2 816 472 A1**
(43) Date of publication of application: **24.12.2014**
(21) Application number: 13250073.7
(22) Date of filing: 19.06.2013
(51) Int. Cl.: G06F 9/44, G06F 11/30

(54) **Model based enforcement of software compliance**

(71) Applicant: British Telecommunications public limited company, London EC1A 7AJ (GB)
(72) Inventor: The designation of the inventor has not yet been filed
(74) Representative: Roberts, Scott Anthony

(57) **Abstract**

A method for enforcing a model deployment specification for a software application in execution in a virtualised computing environment, the method comprising: retrieving a compliance characteristic for the application, the compliance characteristic having associated a compliance criterion; receiving a model deployment specification for the compliance characteristic, the model deployment specification including an identification of a set of model resources being selected to, when instantiated, satisfy the compliance criterion; identifying a set of instantiated resources as resources instantiated for execution of the application; in response to a determination that the set of model resources includes absent resources as resources outside the set of instantiated resources, modifying the set of instantiated resources by instantiating the absent resources for execution of the application such that the absent resources are included in the set of instantiated resources.

## Description

### Field of the Invention

The present invention relates to enforcement of software compliance for software applications. In particular, it relates to enforcement based on a model deployment specification.

### Background of the Invention

The increasing deployment of software applications to service based environments, such as Infrastructure as a Service (IaaS), Platform as a Service (PaaS) and cloud computing environments places a greater burden on application owners and service providers to ensure applications comply with compliance requirements and to demonstrate such compliance. Compliance requirements can be many and varied and can originate from, inter alia, legal or regulatory requirements, application owner requirements, technical requirements, compatibility requirements, and service level agreement requirements.

Manual auditing of a software application can be effective if an auditor has wide ranging access to the application and all the service provider facilities and resources employed for executing the application. The auditor is required to examine each compliance requirement and each resource for the application to assess an extent of compliance. This is particularly cumbersome where resources are distributed over multiple service providers using multiple disparate implementations.

Such auditing is further deficient where services deployed for a software application change as a result of redeployment or reprovisioning of the resources instantiated to provide the application. Such redeployment or reprovisioning can occur automatically. For example, cloud computing services providers can change resources instantiated for an application at runtime in response to changing demands of the application in execution. Substantial increases in network traffic for a web application can be met with a corresponding reprovisioning of the application to instantiate technical resources offering a greater capacity. This characteristic of flexible infrastructures, platforms and services for the deployment of applications is known as "elasticity" since it provides an approach to resource deployment that is flexible enough to grow and shrink with changing demands or requirements of a deployed application. Elasticity can draw on additional resources within an infrastructure, service or cloud, or alternatively can engage additional infrastructures or cloud services.

Characteristics of a software application can be many and varied and can be distributed throughout the application. Additionally, determining a level of compliance of the software application can require information from multiple sources including the software application itself, a service based environment with which the application operates such as a virtualised computing environment, and software components operating external to both the application and the environment. Further, the elasticity of service based environments can result in changes to the configuration of a deployed application, including changes to the configuration of resources employed by the application and the use of new or alternative resources. Such changes can take place at execution time of an application and any compliance assessment conducted for an application before deployment will be outdated as soon as any such change takes place.

### Summary of the Invention

In accordance with a first aspect, the present invention accordingly provides a method for enforcing a model deployment specification for a software application in execution in a virtualised computing environment, the method comprising: retrieving a compliance characteristic for the application, the compliance characteristic having associated a compliance criterion; receiving a model deployment specification for the compliance characteristic, the model deployment specification including an identification of a set of model resources being selected to, when instantiated, satisfy the compliance criterion; identifying a set of instantiated resources as resources instantiated for execution of the application; in response to a determination that the set of model resources includes absent resources as resources outside the set of instantiated resources, modifying the set of instantiated resources by instantiating the absent resources for execution of the application ,such that the absent resources are included in the set of instantiated resources.

Thus by modifying the set of instantiated resources to include absent resources, resources selected to satisfy the compliance criterion are instantiated for the application. In this way the model deployment specification is applied to the application at execution time as a means of enforcing the compliance requirements defined by the compliance characteristic and associated criterion.

Preferably the compliance criterion is based on a formal parameter and the compliance criterion defines a set of compliant resource states for the set of instantiated resources, and the method further comprises: selecting a software component for providing an actual parameter corresponding to the formal parameter, the actual parameter being based on data concerning one or more resources in the set of instantiated resources; evaluating the compliance criterion using the actual parameter to determine a state of the set of instantiated resources; in response to a second determination that a state of the set of instantiated resources is outside the set of compliant resource states, modifying the set of instantiated resources to provide a modified set of instantiated resources having associated resources with a state belonging to the set of compliant resource states.

Thus, in this way, the model deployment specification is continually monitored and updated in response to runtime assessments of the effectiveness of the model deployment specification by assessing compliance of applications conforming to the model deployment specification and enforcing compliance through application modification.

Preferably the selection of the software component is based on an identification of one or more data items that the software component is operable to provide.

Preferably the method further comprises: modifying the model deployment specification in accordance with the set of instantiated resources modified in response to the second determination.

Preferably the method further comprises, in response to a determination that the set of instantiated resources is changed, repeating at least the identifying and modifying steps.

Preferably each resource in each of the sets of model resources and instantiated resources includes one or more of: an identification of a software component; an identification of a dataflow; a configuration of a software component; and a configuration of a dataflow.

Preferably at least one of the absent resources includes a configuration of a software component, and wherein instantiating the at least one absent resource includes modifying a configuration of a software component in the instantiated set of resources.

The present invention accordingly provides, in a second aspect, an apparatus for enforcing a model deployment specification for a software application in execution in a virtualised computing environment, the apparatus comprising: a compliance assessment component operable to retrieve a compliance characteristic for the application, the compliance characteristic having associated a compliance criterion; a model based enforcement component operable to receive a model deployment specification for the compliance characteristic, the model deployment specification including an identification of a set of model resources being selected to, when instantiated, satisfy the compliance criterion; an absent resource identifier component operable to identifying a set of instantiated resources as resources instantiated for execution of the application, the absent resource identifier component being further operable to determine if a set of model resources includes absent resources as resources outside the set of instantiated resources; and an instantiated resource modifier component operable to modify the set of instantiated resources by instantiating the absent resources for execution of the application such that the absent resources are included in the set of instantiated resources.

The present invention accordingly provides, in a third aspect, a computer program element comprising computer program code to, when loaded into a computer system and executed thereon, cause the computer to perform the steps of the method set out above.

### Brief Description of the Drawings

A preferred embodiment of the present invention will now be described, by way of example only, with reference to the accompanying drawings, in which:
Figure 1 is a block diagram of a computer system suitable for the operation of embodiments of the present invention;
Figure 2 is a component diagram of a compliance augmentation tool arranged to augment a deployment specification for a software application in accordance with an exemplary embodiment of the present invention;
Figure 3 is a detailed component diagram of the arrangement of Figure 2 in accordance with an exemplary embodiment of the present invention;
Figure 4 is a flowchart of a method of the compliance augmentation tool of Figures 2 and 3 in accordance with an exemplary embodiment of the present invention;
Figure 5 is a component diagram illustrating resource identification and compliance characteristic selection processes in accordance with an exemplary embodiment of the present invention;
Figure 6 is a component diagram illustrating a deployment of a software application with a virtualised computing environment in accordance with an exemplary embodiment of the present invention;
Figure 7 is a component diagram of a plurality of compliance components in accordance with an exemplary embodiment of the present invention;
Figure 8 is a flowchart of a method of the compliance assessment component of Figure 6 in accordance with an exemplary embodiment of the present invention;
Figure 9 is a schematic illustration of an arrangement for determining a level of compliance of the software application of Figure 6 with a compliance characteristic in accordance with an exemplary embodiment of the present invention;
Figure 10 illustrates components operable in a compliance enforcement process for a deployed software application executing with a virtualised computing environment in accordance with an exemplary embodiment of the present invention;
Figures 11a to 11d are exemplary component diagrams illustrating compliance enforcement processes in use for exemplary applications deployed with virtual computing environments in accordance with exemplary embodiments of the present invention;
Figure 12 is a component diagram of a compliance enforcement process for enforcing a model deployment specification in accordance with a preferred embodiment of the present invention;
Figure 13 is a detailed component diagram of a compliance enforcement process for enforcing a model deployment specification in accordance with a preferred embodiment of the present invention; and
Figure 14 is a flowchart of a method for enforcing a model deployment specification in accordance with a preferred embodiment of the present invention.

### Detailed Description of the Preferred Embodiments

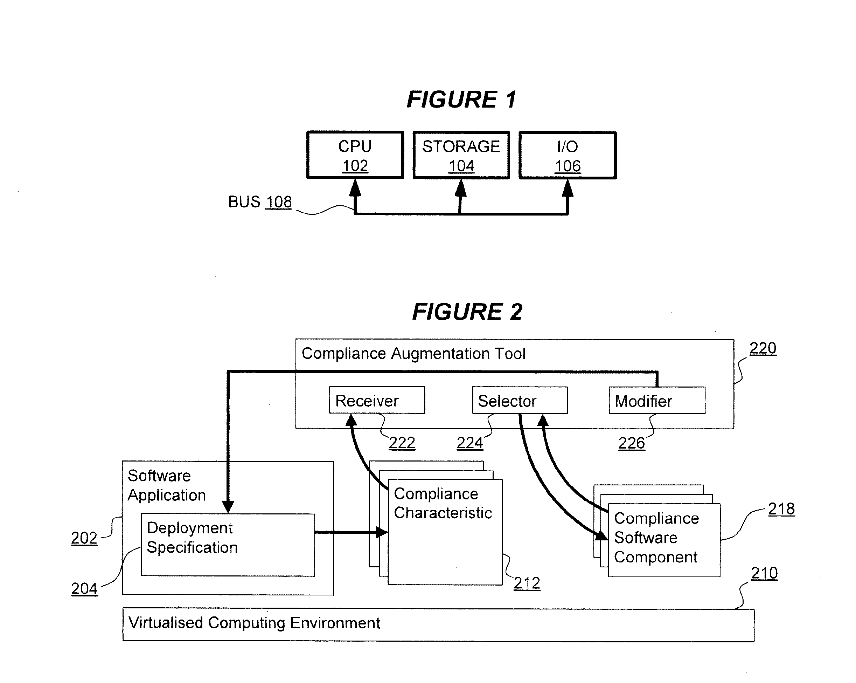

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of a compliance augmentation tool 220 arranged to augment a deployment specification 204 for a software application 202 in accordance with an exemplary embodiment of the present invention. The compliance augmentation tool 220 is a software or hardware component operable to: receive one or more compliance characteristics 212 via receiver 222; select one or more software components 218 via selector 224; and modify the deployment specification 204 via modifier 226.

The receiver 222 is a software or hardware component operable to receive one or more compliance characteristics 212. A compliance characteristic is a characteristic of a deployed software application, such as application 202 deployed for execution in a virtualised computing environment 210. Each of the compliance characteristics 212 received by the receiver 222 are used to determine an extent or level of compliance of the software application 202 when deployed as is described in detail below. For example, compliance characteristics 212 can be defined in a Cloud Compliance Matrix (CCM) provided by the Cloud Security Alliance (CSA).

The selector 224 is a software or hardware component operable to select one or more software components as compliance software components 218 for assessing, measuring or determining an extent or level of compliance of the software application 202 when deployed.

The modifier 226 is a software or hardware component operable to modify a deployment specification 204 associated with the software application 202 to identify the selected compliance software components 218 such that, on deployment of the software application 202, the selected compliance software components 218 are operable to determine a level or extent of compliance of the software application 202 with the received compliance characteristics 212. For example, the modifier 226 can modify the deployment specification 204 by amending, supplementing or augmenting the deployment specification 204 such that the selected compliance software components 218 are instantiated at runtime of the deployed application 202.

Thus, in this way the compliance augmentation tool 220 is operable to modify the deployment specification 204 for the application 202 to incorporate compliance software components 218 selected by the selector 224 based on the received compliance characteristics 212. The deployed software application 202 in operation at runtime is thus augmented by the selected compliance software components 218 such that the compliance software components 218 function to retrieve, inter alia, data, metrics, configuration details, measurements, test results or any other information suitable for determining characteristics of the deployed software application 202. Such information on the characteristics of the application 202 are suitable for determining an extent or level of compliance of the application 202 with the received compliance characteristics 212. The inclusion of the compliance software components 218 as part of the deployment of the application 202 means that the extent or level of compliance can be continually determined irrespective of whether the software application 202 and/or the virtualised computing environment 210 is adapted, redeployed, adjusted or otherwise changed at runtime, such as in response to changes in the operation of the application 202 or in response to service based facilities such IaaS, PaaS, SaaS or Cloud Computing facilities. For example, changes to the workload of application 202 may result in a corresponding change to the provisioning of resources for the application by an infrastructure or platform service provider. Such changes can reflect a feature of services provided environments known as 'elasticity' involving the scaling up or down and/or transitioning of resources to accommodate changing needs of the application 202 or changing demands on the resources or services of the service providers. The deployment of the compliance software components with the application 202 allows for the determination of an extent or level of compliance even when such changes are effected to the application or virtualised computing environment 210.

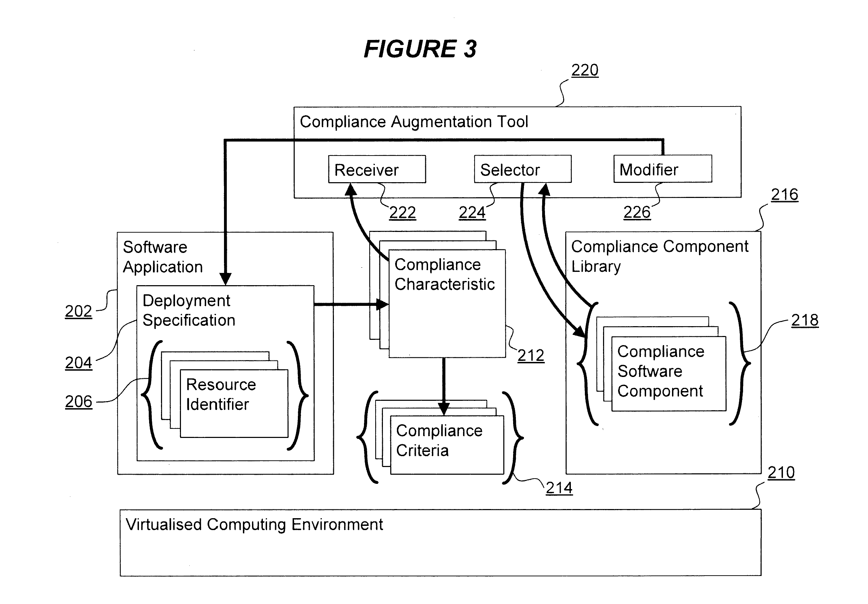

Figure 3 is a more detailed component diagram of the arrangement of Figure 2 in accordance with an exemplary embodiment of the present invention. Many of the features of Figure 3 are identical to those described above with respect to Figure 2 and these will not be repeated here.

The virtualised computing environment 210 is an environment for the deployment of the software application 202. For example, the virtualised computing environment 210 can be provided as a particular operating system executing within a virtual machine with a hypervisor on a hardware device or, potentially, a distributed arrangement of hardware devices. The virtualised computing environment 210 can be provided as a service-based technology such that the environment 210 is delivered as a service for the installation and execution of a software application such as application 202. In a preferred embodiment, the virtualised environment is provided as part of a Cloud Computing service provided by a Cloud Computing service provider such as BT Cloud Compute available from British Telecommunications plc. Additionally or alternatively, the virtualised computing environment 210 can be provided as, or operate with, a service based infrastructure and/or platform such as IaaS and/or PaaS.

Deployment of the software application 202 includes any or all of installing, configuring, arranging and adapting the software application 202 such that the application 202 is executable with the virtualised computing environment 210. For example, a web based software application can be installed to execute with an operating system executing on a virtual machine, the virtual machine being configured to include networking facilities and the virtual machine also having installed thereon a web server having a certain configuration, a database and certain other requirements defined for the application. All such installation and configuration such that the web based software application is executable in the virtualised computing environment 210 is part of the deployment of the application.

The software application 202 has associated a deployment specification 204 suitable for use in deploying the software application 202 with the virtualised computing environment 210. For example, the deployment specification 204 can include a specification of an architecture of the software application 202 and/or an architecture of software components required for the application 202. Additionally or alternatively, the deployment specification 204 can include specifiers or descriptors of application or other software or platform components that are required for the deployment of the application 202.

In some embodiments the virtualised computing environment 210 is provided as, or operates with, a service based infrastructure and/or platform such a Cloud Computing service, an IaaS service and/or a PaaS service. In such embodiments the deployment specification 204 is further suitable for use in deploying the software application 202 with such services. The deployment specification 204 identifies one or more resources required for the deployment of the application 202 such that the application executes with the virtualised computing environment 210. Resources can include functions, dataflows and/or technologies. Examples of function resources include bespoke functions, procedures, modules or components provided for the software application 202, such as a library containing functions embodying or supporting the application 202 or a class of instantiable objects providing methods and routines of or for the application 202. Examples of dataflow resources include communications between software components such as the invocation of a function, routine or method of a first component by a facility of a second component. A further example of a dataflow resource is a coupling between two or more components such that messages are passed, requests are sent or data is shared between the two components. Such components can be internal to the application 202 when deployed, part of the virtualised computing environment 210 or external to the application and the virtualised computing environment 210. Examples of technology resources include particular software components, applications or facilities to be installed to deploy the application 202 For example, a technology resource can be a database software component from a particular technology vendor at a particular version, release or level. Further examples of technology resources include intrusion detection or prevention technologies, virus scanning technologies such as antivirus software, web servers, operating systems, middleware and message handling technologies.

Thus, resources can include, inter alia, software or hardware components, software packages, modules, applications, services or solutions, networking facilities, protocols, storage facilities including databases, middleware facilities, user interface facilities and connectivity services. The deployment specification 204 may explicitly identify resources such as an explicit identification of a particular database or web server facility. Alternatively or additionally, the deployment specification 204 can be suitable for identifying a resource such that the identification is not explicit but is discernable. For example, an explicit identification of a web server resource by the software application further identifies dataflows between web page repositories, server side script repositories and the web server. Such dataflows are identified by the deployment specification 204 while such identification is not necessarily explicit. In all cases the deployment specification identifies resources as is illustrated schematically in Figure 3 as a set of resource identifiers 206.

In identifying resources for the deployment of the software application 202, the deployment specification 204 can include an architecture specification as a specification of an environment such as the virtualised computing environment 210, potentially including a definition of an architecture of technology components such as software components, software packages, applications, services or solutions required for the deployment of the application. For example, the deployment specification 204 can be at least partly embodied as an architecture, environment, platform, topology or software stack specification. Such specifications can be expressed in formal terms such as through formal specification languages, semantic definitions, models or diagrams. For example, an architecture of the virtualised computing environment 210 can be expressed as a unified modelling language (UML) movel such as a physical UML model, a deployment model or a component model such as are described in "UML Distilled - A Brief Guide to the Standard Object Modelling Language" (Martin Fowler and Kendall Scott, 2000). Further, an architecture of the virtualised computing environment 210 can be built using a formal modelling tool such as the tools in the IBM Rational suite of products (IBM and Rational are trademarks or registered trademarks of IBM Corp. in some countries.) The architecture of the virtualised computing environment 210 is expressed in a parseable or machine readable manner such as within a standard document format, data structure, specification language, modelling language or markup language.

For example, a configuration of the virtualised computing environment 210 can be partly or completely expressed in configuration specifications such as XML files. An example of an XML specification of a virtual machine component of a virtualised computing environment 210 is a domain specification parsed by the 'libvirt' tool. The domain specification is a virtual machine specification stored in an XML file which, when processed by the libvirt tool, can be used to create a new virtual machine in a virtualised computing environment 210. The libvirt domain specification can include, inter alia, the specification of: a hypervisor; an operating system; a boot mechanism such as BIOS bootloader; CPU allocation; CPU tuning; memory allocation; CPU topology; power management; clock and time configuration; input/output device configuration; storage device configuration; filesystem configuration; device busses and controllers; network interfaces; input devices; graphic framebuffers; video devices; consoles; and other physical or software characteristics of a virtualised computing environment 210. Thus a libvirt domain specification can comprise at least part of the deployment specification 204 for an application.

Additionally or alternatively, in identifying resources for the deployment of the software application 202 the deployment specification 204 can include a specification or description of the application 202 and how the application should be deployed, such as by identifying constituent parts of the application and defining installation and configuration details. For example, the paper "Solution Deployment Descriptor 3 Specification 1.0" (Organization for the Advancement of Structured Information Standards (OASIS), 2008) describes a standard for a set of XML documents that define deployment metadata about deployment artifacts and the aggregation of deployment artifacts. The solution deployment descriptor (SDD) provides a standard way to encode deployment information. Such XML documents containing SDD information can be parsed to identify resources associated with the deployment specification. Deployment artifacts are package contents that can be processed to create or modify software resources in the deployment environment. These resources collectively make up the software whose deployment is described by the SDD and include items such as executable files and database table definitions. Examples of deployment artifacts are Linux RPM files, Microsoft MSI files, setup.exe, ZIP, and custom installation executable files (see "Solution Deployment Descriptor (SDD), Part 1: An emerging standard for deployment artifacts", McCarthy & Miller, 2008). Thus the SDD is suitable for identifying resources require for the deployment of an application 202 to a virtualised computing environment 210. Such resources can include applications, software components or technologies installed or deployed for the operation of the software application 202, such as database software, middleware, message handling software, security software, intrusion detection or prevention software etc.

Further techniques suitable for the identification of resources for the deployment of software application 202 include, inter alia: functional decomposition; data model definitions; data schema definitions; library linkages; class and/or object models; component introspection such as object introspection; code analysis such as source code analysis; software component models; component interaction models; and data structures such as those identified by, or available from, integrated software development environments. Such techniques can be employed to identify functional and data components within the application 202. For example, application source and/or packaging code including package information, library linkages.such as static or dynamic linkages, build scripts, install scripts or similar, can be used to identify resources. Functional components within the application 202 and resources employed by, linked to, or otherwise associated with, the software application 202 such as resources in the virtualised computing environment 210, software components installed with or for the software application 202 or software components constituting the platform, PaaS, IaaS or other aspects of the architecture of the application 202 or environment 210 can be identified. Further, by reference to data schemas, application and library linkages, build and packaging scripts it is possible to identify dataflow resources. All such insights obtainable about the software application and the virtualised computing environment and being suitable for identifying, directly or indirectly, resources for the software application, constitute part of the deployment specification 204.

It will be apparent to those skilled in the art that, while the deployment specification 204 is illustrated in Figure 2 as being comprised within the software application 202, the deployment specification 204 need not be so integrated and alternatively the deployment descriptor can be associated with the software application 202 or generated for the software application 202. Equally, the deployment specification 204 can exist independent of the software application 202 such that the deployment specification 204 specifies how technologies, software, hardware etc. are to be deployed in order to constitute the software application 202.

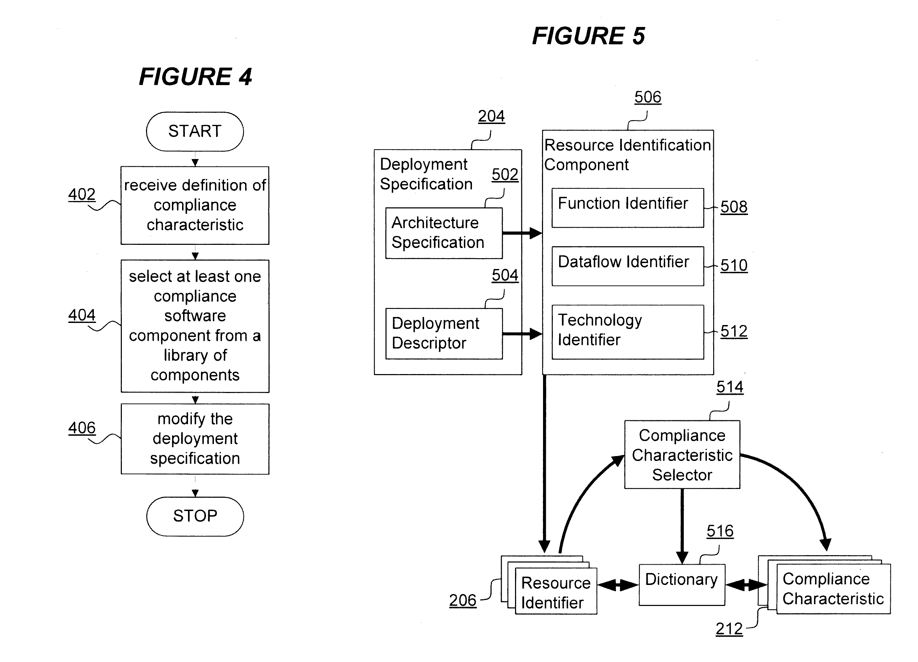

One or more of the resources identified by the deployment specification 204 are resources about which compliance characteristics 212 of the software application 202 can be assessed on deployment of the software application 202. Which of the compliance characteristics 212 is relevant to the software application 202 is determined based on the resources identified by the deployment specification 204 as is described in detail below with respect to Figure 5. As a characteristic of the software application 202 when deployed, each of the relevant compliance characteristics 212 can relate to characteristics of the software application 202 itself and/or characteristics of the virtualised computing environment 210 with which the software application 202 executes. Yet further, relevant compliance characteristics 212 can relate to characteristics of software, hardware, functions, features or services employed in deploying the software application 202 such as software installed with the virtualised computing environment 210, and/or software, hardware, functions, features or services eternal to both the software application 202 and the virtualised computing environment 210, such as software components providing services or functions to the software application 202 or the virtualised computing environment 210. Thus, the compliance characteristic 212 can include characteristics of the application 202, the virtualised computing environment 210, any environment for the deployment of the application 202 such as a Cloud Computing service, an IaaS service, a PaaS service, or a service or function provided external to any virtualised, Cloud, IaaS or PaaS service but operating in conjunction with such service.

Examples of characteristics of software applications include, inter alia: features, facilities, attributes and services of an application such as: resources used; algorithms employed; protocols supported; versions of features, algorithms, services or protocols supported or used; performance characteristics such as speed, overhead or throughput; a level or standard of security; adherence to one or more defined standards; update or refresh intervals used; level of up-to-datedness of features, facilities, attributes or services; environments, systems, protocols or functions used; particular versions or levels of environments, systems protocols or functions used; hardware or software supported; audit facilities available; data governance technology or services employed; user access controls employed; hardware requirements; languages used; encryption standards used; patch management processes employed; intrusion detection or prevention facilities available; virus-detection, protection and prevention facilities available; financial handling facilities available; diagnostic tools employed; diagnostic services available; legal or regulatory requirements adhered to; policies employed; third-party access controls in place; reliability facilities provided; accessibility features available; stability features employed; database used; database facilities supported; geographic location of hardware or software; particular geographic distribution, or non-distribution, of hardware or software; features of physical equipment security; networks supported; data integrity facilities used or measures available; and any other characteristic conceivably attributable to a software application as will be apparent to those skilled in the art.

Each of the compliance characteristics 212 is defined by a set of compliance criteria 214. The set of compliance criteria 214 for a compliance characteristic 212 is used to determine an extent or level of compliance of the deployed software application 202 with the compliance characteristic 212. Each criterion in the set of compliance criteria 214 concerns a resource identified by the deployment specification 204. For example, a compliance criterion may explicitly relate to a resource identified by one of the resource identifiers in the set of resource identifiers 206. Alternatively or additionally, a compliance criterion can concern a feature, attribute, characteristic or component associated with a resource. For example, a criterion may relate to, inter alia, a provider of a resource, a counterpart to a resource, a configuration of a resource or a function of the resource.

Where multiple compliance criteria 214 define a compliance characteristic 212 then satisfaction of all the compliance criteria 214 is normally required for the deployed software application 202 to be fully compliant. Satisfaction of anything less than all the criteria 214 will normally constitutes non-compliance. In some embodiments a single criterion in the set of compliance criteria 214 is sufficient to define a compliance characteristic. Further, in some embodiments, a more complex set of compliance criteria 214 may be conceived such that satisfaction of a subset of the compliance criteria 214 by a deployed software application 202 is determined to be sufficient to constitute full compliance with the compliance characteristic 212. For example, multiple alternative compliance criteria 214 may be provided, any or all of which are satisfactory alternatives to each other. Yet further, in an alternative embodiment the set of compliance criteria 214 may be comprised of a plurality of subsets of compliance criteria, any or all of which being sufficient to constitute compliance with the compliance characteristic 212. Thus, an extent to which a deployed software application 202 satisfies compliance criteria 214 in the set of compliance criteria is suitable for determining a level of compliance of the software application 202 with the compliance characteristic 212 when the application 202 is deployed. One way to measure a level of compliance for the deployed software application 202 is to evaluate a proportion of all the compliance criteria 214 in the set of compliance criteria 214 that are satisfied and use such proportion as a quantitative measure of a level or extent of compliance. In some embodiments different compliance criteria 214 can have different weights associated such that an evaluation of a quantitative level of compliance includes applying weights, such as multiplicative factors, to certain of the compliance criteria 214 when determining a proportion of all the compliance criteria 214 that are satisfied. In this way it is possible to impart a greater emphasis on certain of the compliance criteria 214 in the set.

The compliance software components 218 belong to a set stored in a compliance component library 216. The library 216 can be a data store, database, single or multiple static or dynamic software libraries, repository, software object library or any other suitable mechanism for storing the compliance software components 218 as will apparent to those skilled in the art. Each compliance software component 218 is selectable for one or more compliance characteristics 212 such that a compliance software component 218 is operable to contribute to an assessment of an extent or level of compliance of one or more compliance characteristics 212. Thus, in preferred embodiments, the compliance software components 218 are operable to assess the satisfaction of the one or more compliance criteria 214 associated with one or more compliance characteristics 212.

The compliance software components 218 can be embodied as, inter alia, software routines, agents, modules, functions, methods or objects for determining an extent or level of compliance of the software application 202 with the received compliance characteristics 212. The level of compliance of the software application 202 is assessed, determined or measured when the application 202 is deployed and can include a level of compliance of the application 202 itself by virtue of the functions, operations, behaviours, data items and communications of the software application 202 and additionally the compliance of the execution environment in which the application 202 operates including, inter alia, the virtualised computing environment 210 and any additional internal or external facilities, services or components with which the application 202 operates.

In an exemplary embodiment, each of the compliance software components 218 is a functional component for executing with the deployed application 202. In some embodiments a software component 218 can be embodied as a configuration change to the software application 202, such as a selection of a mode of operation of a component of the software application 202. For example, a compliance software component 218 can be embodied as a change of a mode of operation of a function of the application 202 such that the function operates to generate trace output, such as debug or verbose status information. Such a compliance software component 218, possibly in conjunction with other compliance software components 218 or other functionality, can cause the generation of additional data that can be used to determine an extent or level of compliance with a compliance characteristic 212. Further, in some embodiments, a compliance software component 218 can be operable to prepare and/or send messages or invoke functions or engage application programming interfaces (APIs) of components comprised in the application 202, the environment 210 or other components, features or services executing with the application 202. In some embodiments a compliance software component 218 can be operable to test or challenge a feature or service of the application 202, environment 210 or other components. Further examples of the operation of compliance software components 218 include, inter alia, components that analyse, check, inspect, evaluate, scrutinise, probe or review features or services of the application 202, environment 210 or other components.

In a preferred embodiment, the virtualised computing environment 210 provides interfaces such as application programming interfaces (APIs) accessible to compliance software components 218. The compliance software components 218 can use such interfaces to, inter alia: collect data; request information; retrieve or set configuration; activate or deactivate functionality; and other features and functionality provided by the interface. Such information and functions provided by the interface are suitable for the compliance software component 218 to contribute to an assessment of an extent or level of compliance of the software application 202 operating with the virtualised computing environment 210.

Further, in a preferred embodiment, resources external to both the application 202 and the virtualised computing environment 210 can provides interfaces such as application programming interfaces (APIs) accessible to compliance software components 218. Such components can include, inter alia: third party services or functions; supplementary facilities; external routines; collaborating applications; or other external resources. The compliance software components 218 can use such interfaces in a manner similar to the use of interfaces of the virtualised computing environment 210 described above.

While the receiver 222, selector 224 and modifier 226 are illustrated as being comprised within the compliance augmentation tool 220, it will be appreciated by those skilled in the art that these components may be provided external to the compliance augmentation tool 220 such as in association with, in communication with or otherwise operable with the compliance augmentation tool 220.

Figure 4 is a flowchart of a method of the compliance augmentation tool 220 of Figures 2 and 3 in accordance with an exemplary embodiment of the present invention. The method augments a deployment specification 204 of a software application 202 such that an extent or level of compliance of the application 202 with a compliance characteristic 212 can be determined when the application 202 is deployed. Initially, at step 402, a definition of the compliance characteristic 212 is received including a set of one or more compliance criteria 214. The satisfaction of the compliance criteria 214 for the compliance characteristic 212 is suitable for determining a level of compliance of an application 202 with the compliance characteristic when the application is deployed. At step 404 at least one compliance software component 218 is selected from a compliance component library 216. The selection is based on the definition of the compliance characteristic 212 as will be described in detail below with respect to Figure 5. The compliance software component 218 is operable to determine a state of satisfaction of at least a subset of the set of compliance criteria 214 for the compliance characteristic 212. At step 406 the deployment specification 204 for the application 202 is modified to identify the selected compliance software components 218 such that, on deployment of the application 202, the application 202 is operable to determine a level of compliance of the application 202 with the compliance characteristic 212.

Figure 5 is a component diagram illustrating resource identification and compliance characteristic selection processes in accordance with an exemplary embodiment of the present invention. Many of the features of Figure 5 are identical to those described above with respect to Figures 2 to 4 and these will not be repeated here. The deployment specification 204 for the software application 202 identifies resources required for the deployment of the application. In the embodiment of Figure 5 the resources are identified using an architecture specification 502 and a deployment descriptor 504. A resource identification component 506 is a software or hardware component for establishing resource identifiers 206 based on the deployment specification 204. The resource identification component 506 can be an integral part of the compliance augmentation tool 220 or, alternatively, the resource identification component 506 can be at least partly external to, and operable or associated with, the compliance augmentation tool 220. In the preferred embodiment the resource identification component 506 includes three further software or hardware components: a function identifier 508; a dataflow identifier 510; and a technology identifier 512. The function identifier 508 is operable to identify function resources required for the deployment of the software application 202, such as function resources previously described. The dataflow identifier 510 is operable to identify dataflow resources required for the deployment of the software application 202, such as dataflow resources previously described. The technology identifier 512 is operable to identify technology resources required for the deployment of the software application 202, such as technology resources previously described. The function identifier 508, dataflow identifier 510 and technology identifier 512 are operable to identify resources 206 based on the architecture specification 502 and the deployment descriptor 504. It will be appreciated that while the resource identification component 506 is illustrated as including the function identifier 508, dataflow identifier 510 and the technology identifier 512, a subset of these components or one or more alternative components suitable for identifying at least a subset of resources required to deploy the software application 202 could alternatively be employed.

In a preferred embodiment, the resource identifiers 206 of the resources required to deploy the software application 202 are used to identify a set of compliance characteristics 212 for the application 202. A compliance characteristic selector 514 is a software or hardware component for selecting one or more compliance characteristics 212 from a dictionary 516 of compliance characteristics. The selected compliance characteristics 212 are those compliance characteristics 212 with which an extent or level of compliance of the deployed application 202 is measured or assessed. The compliance characteristic selector 514 can be an integral part of the compliance augmentation tool 220 or, alternatively, the compliance characteristic selector 514 can be at least partly external to, and operable or associated with, the compliance augmentation tool 220.

In a preferred embodiment the dictionary 516 is a repository of references to compliance characteristics, some or all of which can be selected by the compliance characteristic selector 514 for applicability to the application 202. The compliance characteristic selector 514 can include rules for determining which compliance characteristics should be selected from the dictionary 516. In a preferred embodiment the dictionary 516 provides a mapping between resources and compliance characteristics such that the compliance characteristics 212 can be selected based on the identified resources 206. For example, the dictionary 516 can be a correspondence table relating resources to compliance characteristics. Identified resources 206 can be associated with attributes such as: a resource type; a resource name; a resource version etc. The dictionary 516 can provide a correspondence, mapping, association or other identification of one or more compliance characteristics 212 for certain attributes of a resource. For example, resources of the type "database" can be associated with compliance characteristics 212 relating to database characteristics. Thus, in use, the compliance characteristic selector 514 selects compliance characteristics 212 for receipt by the receiver 222 of the compliance augmentation tool 220. In this way the compliance characteristics 212 with which an extent or level of compliance of the deployed software application 202 is measured can be determined based on the deployment specification 204 for the software application 202.

Some compliance characteristics in the dictionary 516 may be designated as mandatory or broadly applicable such that the compliance characteristics are used for all applications irrespective of the identified resources 206. Further, compliance characteristics 212 can be identified for the software application 202 based on specific operational requirements determined for the application 202. In some embodiments, a set of compliance characteristics 212 can be defined to reflect operational standards required for the deployed application 202 and/or relevant compliance characteristics 212 can be identified in dependence on the particular constitution and/or configuration of the deployed software application 202 as reflected by the identified resources 206. For example, a software application dealing with personal confidential information may be required to comply with legal and regulatory requirements reflected by one or more compliance characteristics. Accordingly, where an assessment of the identified resources 206 indicates that such information is handled by the application, compliance characteristics relating to such regulatory requirements can be selected by the compliance characteristic selector 514.

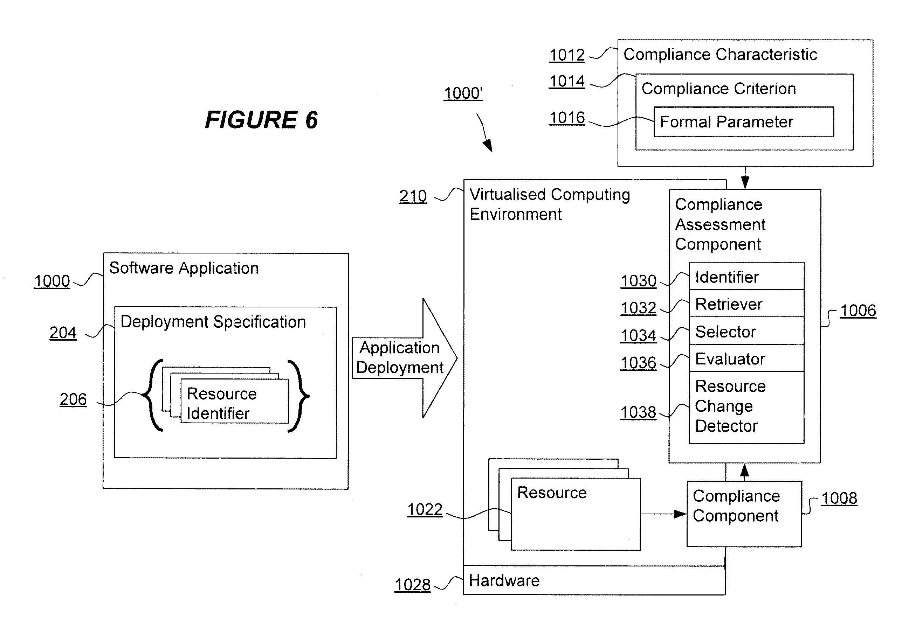

Figure 6 is a component diagram illustrating a deployment of a software application 1000 with a virtualised computing environment 210 in accordance with an exemplary embodiment of the present invention. The software application 1000 of Figure 6 includes a deployment specification 204 identifying resources 206 required for deployment of the application 1000 to the virtualised computing environment 210.

The deployed software application 1000' includes one or more resources 1022 operating with the virtualised computing environment 210. The deployed application 1000' has associated a compliance assessment component 1006. The compliance assessment component 1006 is a software or hardware component operable to determine a level of compliance of the deployed application 1000' based on at least a compliance criterion 1014 and a compliance software component 1008. The compliance assessment component 1006 is executed, instantiated or otherwise deployed in conjunction with the deployed application 1000'. One way to deploy the compliance assessment component 1006 is to include an identifier of the component 1006 with the deployment specification 204 so as to cause the deployment of the compliance assessment component 1006 along with the application 1000. Alternatively the compliance assessment component 1006 can be predefined, predeployed, preinstalled or configurably installed, such as in association with a component of the virtualised computing environment 210 such as a hypervisor 1026 or operating system.

The compliance assessment component 1006 includes: an identifier 1030; a retriever 1032; a selector 1034; an evaluator 1036; and a resource change detector 1038. The identifier 1030 is a software or hardware component operable to identify resources 1022 instantiated for execution of the deployed application 1000'. For example, the identifier 1030 may receive the deployment specification 204 indicating the resources instantiated for the application 1000. Alternatively or additionally the identifier 1030 can monitor the deployed application 1000', the virtualised computing environment 210 or the resources 1022 themselves to identify the resources 1022. In one embodiment, the identifier 1030 receives an indication of the resources deployed for the application 1000' from a component associated with the virtualised computing environment 210 such as a hypervisor component. In an alternative embodiment, the identifier 1030 interfaces with a component of the virtualised computing environment 210 to identify the resources 1022 via in interface such as an API.

The retriever 1032 is a software or hardware component for retrieving a compliance characteristic 1012 for the deployed application 1000'. The retrieval of the compliance characteristic 1012 is based on the resources 1022 identified by the identifier 1030. In one embodiment, the retrieval of the compliance characteristic 1012 is pre-specified or predetermined on or before deployment of the application 1000'. For example, the compliance characteristic 1012 can be specified in a configuration of the deployed application 1000'. In an alternative embodiment the compliance characteristic 1012 is retrieved by the retriever 1032 using a compliance characteristic selector 512, 814 such as is described with respect to Figure 5.

The compliance characteristic 1012 has associated a compliance criterion 1014 being based on a formal parameter 1016. The formal parameter 1016 is a parameter required for an evaluation of the compliance criterion 1014. A data item, argument, or variable supplied to evaluate the compliance criterion 1014, such data item constituting the formal parameter 1016, is known as an actual parameter. A single compliance characteristic 1012 is illustrated in Figure 6, the compliance characteristic 1012 having a single compliance criterion 1014 with a single formal parameter 1016. This representation is chosen for simplicity though it will be appreciated that alternative embodiments can include any number of similar or disparate compliance characteristics each having potentially numerous compliance criteria, each criterion being based on potentially numerous formal parameters. All such compliance characteristics 1012 are retrievable by the retriever 1032.

The selector 1034 is a software or hardware component for selecting a compliance software component 1008 for providing an actual parameter corresponding to the formal parameter 1016. The actual parameter can include or be based on, inter alia: data relating to, about or from one or more resources 1022; data concerning a state of one or more resources 1022; data indicating an occurrence of an event associated with one or more resources 1022; data including a measurement of a characteristic of one or more resources; or a transformation of data associated with one or more resources 1022. The compliance component 1008 contributes to a determination of a level or extent of compliance of the software application 1000 with a compliance characteristic 1012 by providing the actual parameter. The compliance component 1008 is executed, instantiated or otherwise deployed in conjunction with the deployed application 1000'. One way to deploy the compliance component 1008 is to include an identifier of the component 1008 with the deployment specification 204 so as to cause the deployment of the compliance component 1008 along with the application 1000. Thus, in one embodiment, the deployment specification 204 is augmented by the inclusion of a compliance software component identifier, such as in accordance with one of the methods described hereinbefore with respect to Figures 2 to 5. The inclusion of a compliance software component identifier in the deployment specification 204 is such that, on deployment of the software application 1000, compliance software component 1008 is deployed. Alternatively the compliance component 1008 can be predefined, predeployed, preinstalled or configurably installed, such as in association with a component of the virtualised computing environment 210 such as a hypervisor or operating system.

Preferably the compliance component 1008 is one of a set of compliance components executable or executing in association with the virtualised computing environment 210. The selector 1034 is arranged so as to select a compliance component 1008 such that the compliance component 1008 is operable to provide an actual parameter for the compliance criterion 1014. Thus the selector 1034 is operable to select a compliance component 1008 that is operable to access, obtain, retrieve or receive such data on which the actual parameter is based.

Notably, it is not a prerequisite for instantiation of the compliance component 1008 that the component is identified in the deployment specification 204. Rather, the compliance component 1008 can be deployed by default, by design, as a consequence of the deployment of a resource identified for the application 1000 or otherwise automatically. In one embodiment, the compliance assessment component 1006 is deployed along with the application 1000 and the compliance assessment component 1006 is operable to cause the deployment of the compliance component 1008.

Most preferably the compliance assessment component 1006 and the compliance software component 1008 execute with the deployed application 1000' in a trusted mode of operation such that the compliance assessment component 1006 and the compliance software component 1008 have trusted access to aspects of the deployed application 1000'. Such aspects can include: configuration information; interfaces; technologies; configuration information and data flows. Examples of interfaces include logical or software interfaces such as APIs of any or all of the resources 1022 instantiated for the deployed application 1000' or any other component operable with, or as part of, the deployed application 1000'. Examples of technologies include technical components such as software components provided by software suppliers or service providers and providing functions or services such that the compliance component 1008 can request or retrieve information or functions of the components. Examples include components, or providers of components, for intrusion prevention, virus detection, middleware or databases. Typically such technologies are uniquely identifiable such as by a version of the technology.

Compliance software component 1008 enjoys a sufficient level of trust that it is able to retrieve, obtain, receive or access information or functionality of resources in order to provide the actual parameter. Thus, where the compliance characteristic 1012 relates only to a single resource required for the deployment of the application 1000, then trusted access to the single resource may be sufficient. However, it will be apparent to those skilled in the art that trusted access to resources other than a resource to which the compliance characteristic 1012 explicitly relates may be required to provide the actual parameter.

The evaluator 1036 is a software or hardware component operable to evaluate the compliance criterion 1014 using the actual parameter supplied by the compliance component 1008. Such evaluation is suitable for contributing to a determination of a level or extent of compliance of the deployed application 1000' with the compliance characteristic 1012.

The resource change detector 1038 is a software or hardware component operable to detect a change to the resources 1022 instantiated for the deployed application 1000'. Changes to resources can arise numerously including, inter alia: changes to the configuration of a resource by another resource, component or an operator; changes to the configuration of the virtualised computing environment 210; upgrades to a resource; failure of a resource; addition of a new resource; changes to the software application 1000; redeployment of the software application 1000; and reprovisioning of a service based environment provided for the deployed application 1000'. Such reprovisioning is common with cloud computing services, IaaS, PaaS and SaaS environments and can arise in response to a change in the resource requirements of the deployed application 1000' at runtime. For example, the resource demands of the deployed application 1000' can vary based on usage of the application 1000' or throughput of the application 1000'. For example, software applications providing web-based services receiving and reacting to requests received over a network can see a rate of receipt of requests fluctuate over time. Accordingly, a cloud computing service provider may change the resource provisions allocated to such an application in response to fluctuations of resource requirements resulting from such fluctuations in requests. This contributes to the elasticity of such service based environments. The resource change detector can detect changes to the resource instantiated for the application 1000' in numerous ways including, inter alia: the obtaining and monitoring of profiles of resources such as process monitoring; hardware resource monitoring; resource consumption; and configuration settings monitoring. Further, changes to resources can be flagged by the virtualised computing environment 210 or other service based environment such as via an indicator, notification, message or otherwise to indicate a resource change. In one embodiment, the resource change detector 1038 is operable in conjunction with the identifier 1030 to identify a change in resources 1022 instantiated for the deployed application 1000'.

A single compliance component 1008 is illustrated in Figure 6 for simplicity. It will be appreciated that alternative embodiments can employ multiple and potentially disparate compliance components. Multiple compliance components can be employed such that compliance component 1008 or compliance assessment component 1006 further select other compliance components to obtain information required to supply the actual parameters. Thus, compliance components can be organised in a network, hierarchy, or other suitable arrangement such that information required to evaluate the compliance criterion 1014 can be obtained.

While the identifier 1030, retriever 1032, selector 1034, evaluator 1036 and resource change detector 1038 are illustrated as being comprised with the compliance assessment component 1006 it will be apparent to those skilled in the art that any or all of these components could be alternatively provided as a separate component, or part of a separate component, external to and operable in association with the compliance assessment component 1006. Further, while the compliance assessment component 1006 is illustrated as being partly comprised within the virtualised computing environment 210 it will be appreciated by those skilled in the art that the compliance assessment component 1006 could equally be implemented entirely within the virtualised computing environment 210; or alternatively the compliance assessment component 1006 could be implemented external to the virtualised computing environment 210 and associated with the deployed application 1000' such as being operable in communication with the deployed application 1000' via software components, a software interface, a network or any suitable communication means.

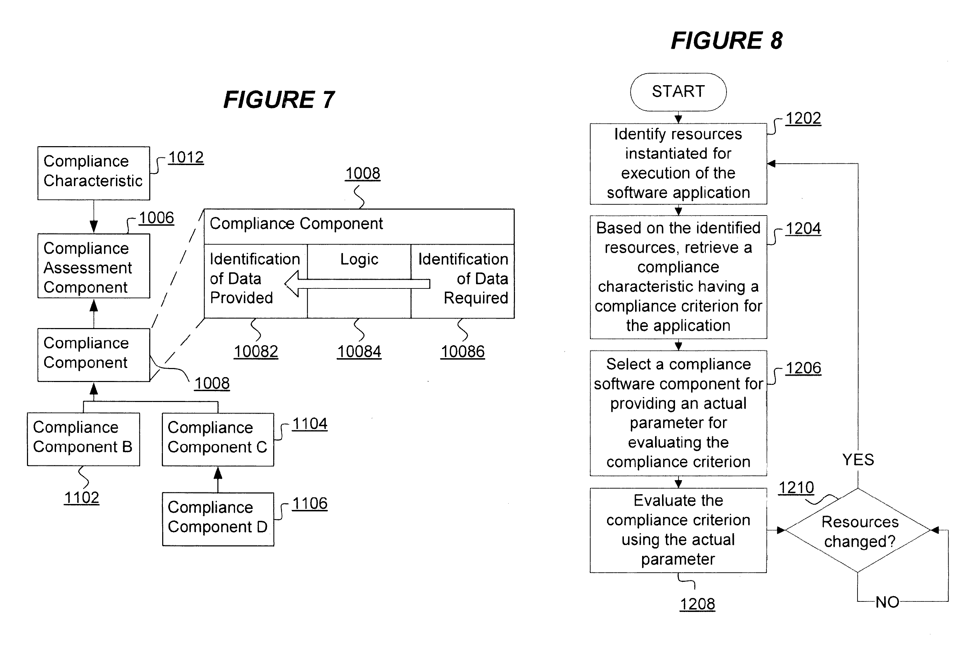

Figure 7 is a component diagram of a plurality of compliance components in accordance with an exemplary embodiment of the present invention. In the arrangement of Figure 7 compliance component 1008 selects further compliance components 1102 and 1104. Compliance component 1104 further selects compliance component 1106. The additional compliance components 1102 to 1106 can be instantiated as a result of augmentation of the deployment descriptor 204 for the application 1000. Alternatively, the compliance component 1102 to 1106 can be instantiated dynamically at runtime, automatically in association with any of the resources of the deployed application 1000', or in response to instantiation requests by the compliance assessment component 1006 or other instantiated compliance components. The compliance component 1008 of Figure 7 selects compliance components 1102 and 1104 to provide data to it, each supplying data constituting at least some of the data required to provide an actual parameter corresponding to the formal parameter 1016. Alternatively, compliance components 1102 and 1104 could be selected by the compliance assessment component 1006. An exploded view of an exemplary embodiment of compliance component 1008 is also illustrated in Figure 7. The compliance component 1008 includes: an identification 10082 of data provided by the compliance component 1008; an identification 10086 of data required by the compliance component 1008; and logic 10084 of the compliance component 1008. The identification 10082 of data provided by the compliance component 1008 is an identification of data that the compliance component 1008 can provide as an output, such as an output to another compliance component or to the compliance assessment component 1006. The identification 10082 can be, inter alia, an advertisement, a publication, a statement or a configuration setting indicating what type, class or category of data the compliance component 1008 is operable to provide. The indication 10086 of data required by the compliance component 1008 is an identification of data that the compliance component 1008 requires in order to generate the data provided by the compliance component 1008. The required data can be obtained from other compliance components, such as components 1102 and 1104 in Figure 7. Thus identification 10086 identifies prerequisite data for the compliance component 1008. Logic 10084 can include functionality and operations performed by the compliance component 1008 including, inter alia: accessing, retrieving or receiving data from resources of the deployed application 1000'; interface operations for cooperating with resources over an API; measurement logic for measuring characteristics of resources; modification or transformation logic to modify or transform data; logic to combine, fuse or integrate data or information; and logic suitable for identifying patterns, themes or characteristics from data or information. Such data or information can include data received from a resource, data received from another compliance component or data resulting from a measurement operation.

This arrangement of the compliance component 1008 is replicated across all compliance components to provide for the interoperation and cooperation of components in obtaining actual parameters required to evaluate the compliance criterion 1014. The selection of the compliance component 1008 by the compliance assessment component 1006 is based on the formal parameter 1016 such that the compliance component 1008 includes an identification 10082 of data it provides that is suitable for constituting an actual parameter corresponding to the formal parameter 1016.

In the exemplary embodiment, the identifications 10082 and 10086 for the compliance component 1008 and the formal parameter 1016 are specified using a common format and/or namespace such that data provided by and required by compliance components can be compared with the formal parameter 1016. In this way it is possible for the compliance assessment component 1006 to select one or more appropriate compliance components to provide data required to evaluate the compliance criterion 1014. Further, it is possible for each compliance component to select further compliance components to provide any required prerequisite data. The common format and/or namespace can be organised in a hierarchy or network such that prerequisite data requirements can be discerned from the namespace.

While the compliance software components 1102 to 1106 are described as software components it will be appreciated by those skilled in the art that any or all of compliance component 1102 to 1106 could be implemented in software, hardware, firmware or combinations of any of software, hardware and firmware. For example, each of the compliance software components 1102 to 1106 can be implemented as a hardware component such as an evaluator component operable to perform the function of a compliance software component.

Figure 8 is a flowchart of a method of the compliance assessment component 1006 in accordance with an exemplary embodiment of the present invention. At step 1202 the identifier 1030 identifies resources 1022 instantiated for execution of the application 1000'. Such an identification of resources 1022 can be determined based on, inter alia: configuration information for the virtualised computing environment 210; processes and services executing in the virtualised computing environment 210 identified using a process monitoring tool, a process and/or service registry and the like; referring to software components operable to interrogate resources for the application 1000'; accessing resource information via an API of one or more resources 1022; and other techniques as will be apparent to those skilled in the art. At step 1204 the retriever 1032 retrieves a compliance characteristic 1012 for the application. The retrieval 1204 is based on the resources identified at step 1202. Compliance characteristics can be associated with resources 1022 such as by way of a compliance characteristic dictionary 516 as is illustrated in Figure 5. Alternatively, associations between resources and compliance characteristics can be more complex such as: rule-based associations depending on multiple resources; associations based on attributes or characteristics of resources such as configurations, settings and or arrangements of resources; associations based on versions of resources; and other associations as will be apparent to those skilled in the art. The retrieved compliance characteristic 1012 has associated the compliance criterion 1014 based on the formal parameter 1016. Subsequently, at step 1206, the selector 1034 selects a compliance software component 1008 to provide an actual parameter corresponding to the formal parameter 1016. The actual parameter is based on data concerning at least one of the resources 1022 such that the compliance criterion 1014 can be evaluated. The selection of the compliance component 1008 is based on an identification, by the compliance component 1008, of one or more data items 10082 that the compliance component 1008 is operable to provide. At step 1208 the evaluator 1036 evaluates the compliance criterion 1014 using the actual parameter. The evaluation contributes to a determination of a level of compliance of the deployed application 1000'. At step 1210 the resource change detector 1038 determines if one or more resources 1022 instantiated for the software application 1000' is changed. Where a resource 1022 is changed, the method returns to step 1202 to repeat the method steps 1202, 1204, 1206 and 1208. In one embodiment, step 1204 is not repeated following a positive determination at step 1210 and the compliance characteristic 1012 from a previous iteration of the method is retained.

Thus embodiments of the present invention provide a separation of concerns between a compliance assessment component 1006 and a compliance software component 1008. Such separation is advantageous where the resources for the deployed application 1000' can change at runtime, such as due to deployment of the application 1000' using a service based environment such as a cloud computing environment. In particular, the software component 1008 is selected to provide the actual parameter such that the selection of an appropriate software component is based on the data requirements for evaluating the compliance criterion 1014. Accordingly, where one or more of the resources 1022 changes, the selection of a software component can result in a different software component able to provide the actual parameter for the changed application. Thus the separation of concerns between the compliance assessment component 1006 and the software component 1008 provides for the selection of an appropriate software component based on the data requirements for evaluating the criterion 1014 and the resources 1022 instantiated for the deployed application 1000'.

Embodiments of the invention thus provide an adaptable approach to compliance assessment for software applications executing with service based infrastructures where resources can change at runtime, such as in response to platform or infrastructure reprovisioning, or where a platform or infrastructure exhibits characteristics of resource elasticity as is typical in cloud computing environments. Embodiments of the present invention further provide for such compliance assessment without a need to interrupt or redeploy the software application, or redeploy a compliance architecture.

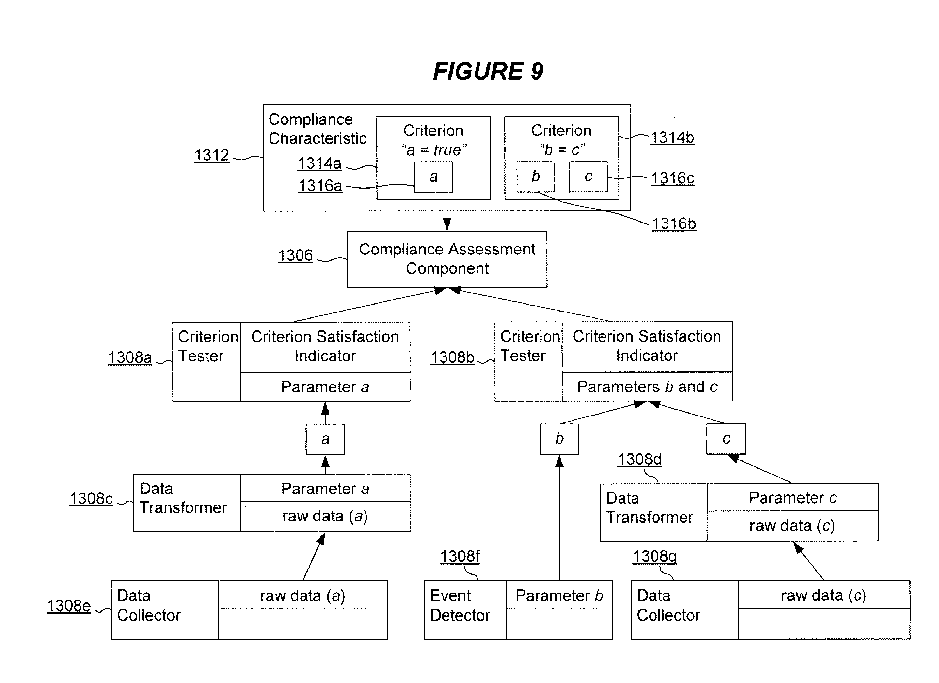

Figure 9 is a schematic illustration of an arrangement for determining a level of compliance of the software application 1000' with a compliance characteristic 1312 in accordance with an exemplary embodiment of the present invention. The compliance characteristic 1312 includes two compliance criteria 1314a and 1314b being expressed in simplified form for ease of understanding. Compliance criterion 1314a is based on a formal parameter "a" 1316a. Compliance criterion 1314b is based on a formal parameter "b" 1316b.

A compliance assessment component 1306 is operable to determine a level of compliance of a software application 1000' with the compliance characteristic 1312. In the exemplary embodiment of Figure 9 the compliance assessment component 1306 achieves this determination by selecting compliance software components 1308a and 1308b as "criterion tester" components operable to evaluate the compliance criteria 1314a and 1314b respectively. In an alternative embodiment the compliance assessment component 1306 is operable to test the criteria 1314a and 1314b itself, based on data provided by other compliance software components.

Compliance components 1308a and 1308b advertise their ability to provide "criteria satisfaction indicators" as output data items. Compliance component 1308a includes an identification of required data indicating that the component 1308a requires actual parameter data corresponding to parameter "a" 1316a. Compliance component 1308b includes an identification of required data indicating that the component 1308b requires actual parameter data corresponding to parameters "b" 1316b and "c" 1316c. Compliance component 1308a achieves its purpose by selecting a further compliance component 1308c, a "data transformer" compliance component. Component 1308c advertises its ability to provide actual parameter data corresponding to parameter "a" 1316a. Component 1308c further indicates its dependency on data indicated as "raw data (a)". To satisfy this dependency, component 1308c selects compliance component 1308e, a "data collector" compliance component. Component 1308e advertises its ability to provide data as "raw data (a)". Data collector component 1308e is operable to interface with one or more resources in the deployed application 1000' to access the raw data. For example, data collector 1308e can access a resource using an API for the resource, or by intervening in a data flow, or any other suitable access mechanism.

Compliance component 1308b achieves its purpose by obtaining actual parameter data corresponding to parameter "b" 1216b by selecting compliance component 1308f, an "event detector" compliance component. Component 1308f advertises its ability to provide actual parameter data corresponding to parameter "b" 1316b. Event detector component 1308f is operable to interface with one or more resources in the deployed application 1000' to detect events, generating actual parameter data corresponding to parameter "b" 1316b.

Compliance component 1308b further achieves its purpose by obtaining actual parameter data corresponding to parameter "c" 1316c by selecting compliance component 1308d, a "data transformer" compliance component. Component 1308d advertises its ability to provide actual parameter data corresponding to parameter "c" 1316c. Component 1308d further indicates its dependency on data indicated as "raw data (c)". To satisfy this dependency, component 1308d selects compliance component 1308g, a "data collector" compliance component. Component 1308e advertises its ability to provide data as "raw data (c)". Data collector component 1308g is operable to interface with one or more resources in the deployed application 1000' to access the raw data, such as is described above with respect to component 1308e.

Thus, each compliance component 1308a to 1308d can provide further information by supplementing, adapting, processing, verifying or reacting to the data from downstream components. In this way it is possible to separate the concerns of the compliance components 1308a to 1308g. Such separation is advantageous when information from multiple information sources is required to determine a level or extent of compliance with a compliance characteristic 1312. For example, different compliance software components can enjoy different privileges in relation to a deployed application such that one compliance software component may have trusted access to resources that another compliance software component does not have. Further, complex deployed applications can have associated many and varied compliance characteristics, each having potentially many and varied compliance criteria. Such criteria can relate to numerous and differing resources required for application deployment, with the differing resources having associated information in a multiplicity of forms. Where there are overlaps in information requirements to assess a level or extent of compliance with multiple compliance characteristics it is advantageous to centralise data gathering for a resource such that any duplication in the retrieving or obtaining of data for assessing compliance criteria is reduced. Further, it is advantageous to distribute responsibility for information collection between compliance software components which can specialise in, dedicate to, relate to or associate with particular resources, data formats, information types, information gathering methods or other variable attributes for a deployed application. Such distribution reduces a degree of coupling in the compliance determination methods and systems and further provides for a granular approach to information gathering.

The approach to determining a level of compliance described with reference to the exemplary embodiments is particularly advantageous in service based software environments such as cloud computing environments. The elasticity of such service based technologies can result in adaptations or modifications to the resources employed in and for a deployed application, including changes in real-time at runtime. Elasticity can also result in the supplementing of resources with additional resources or the replacement of resources with alternative or new resources. Such changes to the resources for a deployed application require repeat assessment of compliance characteristics to ensure a determination of an extent or level of compliance accurately reflects a current configuration of the application. This is particularly important where a particular minimum level of compliance is required for continuing operation of the deployed application such as, for example, to ensure a requisite level of security is provided. The selection of compliance components by a compliance assessment component and/or other compliance components can be undertaken dynamically at runtime. Accordingly, compliance components can change along with the resources for a deployed application.

Selection of, and communication between, compliance components such as components 1308a to 1308g can be achieved using any suitable mechanism known in the art including inter alia: a directory system; a publish-subscribe infrastructure; a request-response protocol; and a message passing scheme such as a brokered messaging infrastructure. In one example, the identifications of data provided by each compliance component can be stored in a directory accessible to other compliance components and/or the compliance assessment component such that when a compliance component is required for a particular data type, parameter or data item, identification of a suitable compliance component can be achieved by reference to the directory.

In a second example, a compliance component can advertise an identification of data it is capable of providing by publishing messages over a publish-subscribe infrastructure such that subscribing components, such as other compliance components or a compliance assessment components, are able to receive such publications by subscribing to receive such publications, such as by subscribing on a topic basis. A topic scheme can be devise, as is known in the art, whereby publications on a particular topic are related. One approach to implementing such a topic scheme uses an identification of a type of data from a global namespace of data types, such as an identification of a formal parameter, such that compliance components requiring data of that type can subscribe to publications on that topic.

In a third example, compliance components can communicate with each other directly or via a compliance assessment component using a predefined protocol such as a request-response protocol. Such a protocol can include a definition of messages for requesting an identification of data provided by a compliance component and requesting data itself. Using such a protocol, compliance components can form a compliance component network having one of any number of potential topologies including, inter alia, hierarchical, star, tree, mesh or combinations thereof.

In a fourth example, compliance components can communicate with each other via a message passing scheme such as a brokered messaging infrastructure. Message broker components are suitable for communicating messages between entities in connected networks of entities and can further adapt or translate messages where communicating components have different formats, styles or needs. Such messages can be used to communicate information about compliance components such as indications of data provided by components. Further, messages can be used to request and receive data from components.

Thus, Figure 9 illustrates how the compliance components are operable to interoperate to provide potentially mulitple layers of data abstraction and granularity, for example ranging from raw data to evidence about compliance criterion satisfaction; and/or multiple data collection or transformation components that enable, for example, the fusion, aggregation, measurement, determination or derivation of data and/or evidence of compliance requirement satisfaction.

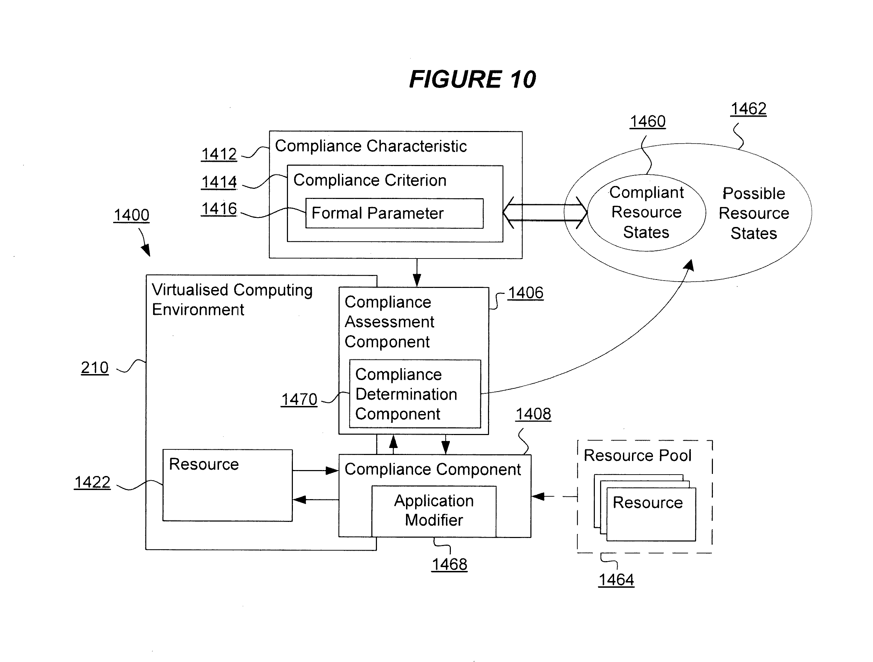

Figure 10 is a illustrates components operable in a compliance enforcement process for a deployed software application 1400 executing with a virtualised computing environment 210 in accordance with an exemplary embodiment of.the present invention. The deployed software application 1400 includes a resource 1422 such as a platform, infrastructure, service, software, dataflow or other resource instantiated for the deployment of the application 1400. Notably, the resource 1422 can be external to either or both the application 1400 and the virtualised computing environment 210. A compliance assessment component 1406 is operable to evaluate a level or extent of compliance of the software application 1400 with a compliance characteristic 1412. In doing so, the compliance assessment component 1406 operates with a compliance software component 1408 as previously described. A compliance criterion 1414 for the compliance characteristic 1412 is suitable for defining a set 1460 of compliant resource states for the resource 1422. The set 1460 of compliant resource states is a subset of a set 1462 of multiple possible resource states for the resource 1422. The set 1462 of multiple possible resource states does not necessarily include all possible resource states. In one embodiment, the set 1462 of possible resource states is defined to be the universe of all states. In an alternative embodiment the set 1462 of possible resource states is not explicitly defined. It will be appreciated by those skilled in the art that one or more compliance criteria associated with one or more compliance characteristics may define one or more sets of compliant states for one or more resources instantiated for the deployed application 1400. For example, a set of compliant states can include a state of a combination of multiple resources instantiated for the application 1400. Further it will be appreciated that the sets 1460 and 1462 of application states may correspond to states of the deployed application 1400 as a whole, which may itself be characterised by states of resources deployed for the application 1400.

An exemplary compliance criterion 1414 is a criterion that all data communicated via a dataflow resource between a sender resource and a receiver resource is encrypted. The exemplary criterion defines a compliant state of the dataflow resource being a state in which the data on the dataflow resource is encrypted. Elaborating the example, the exemplary criterion can be considered to define multiple states of the dataflow resource, such as: a state in which the data on the dataflow resource is encrypted with a 64bit key; and a state in which the data on the dataflow resource is encrypted with a 128bit key. Such compliant states constitute the set 1460. The set 1462 can include additionally a state in which the data on the dataflow resource is not encrypted.

The compliance assessment component 1406 includes a compliance determination component 1470. The compliance determination component 1470 is a software or hardware component operable to determine if a current state of the resource 1422 is outside the set 1460 of compliant resource states. The current state of the resource 1422 is determined based on evidence provided by the compliance software component 1408. While a single compliance component 1408 is illustrated in Figure 10 it will be appreciated that a network, hierarchy or other arrangement of multiple compliance components could be employed as previously described. The compliance component 1408 provides evidence to the compliance determination component 1470 for making the determination. When the compliance determination component 1470 determines that the state of the resource 1422 is outside the set 1460 of compliant resource states, the deployed software application 1400 is modified such that the application 1400 includes a resource having a state within the set 1460 of compliant resource states. Accordingly, such modification of the application 1400 constitutes enforcement of the compliance characteristic 1412.

Modification of the application 1400 is undertaken by an application modifier 1468 of the compliance component 1408. One example of a modification the application modifier 1468 can apply to the application 1400 is the introduction of one or more additional resources from a pool of resources 1464. Such additional resources can be selected by the application modifier 1468 such that the resources are operable in a state within the set 1460 of compliant states. Another example of a modification the application modifier 1468 can apply to the application 1400 is the replacement of the resource 1422 with one or more resources from a pool of resources 1464, such replacement resources being operable in a state within the set 1460 of compliant states. A further example of a modification by the application modifier 1460 is a modification to a configuration, arrangement, instantiation or deployment of the resource 1422, or other resources associated with the application 1400, such that the resource 1422 is operable to transition to a state within the set 1460 of compliant states. Thus after modification by the application modifier 1468, the application 1400 has a resource having a state within the set 1460 of compliant resource states and the compliance characteristic 1412 has been enforced.

It will be appreciated that the compliance assessment component 1406 can be further operable to repeat the evaluation of a level or extent of compliance of the software application 1400 with a compliance characteristic 1412. Such repeated evaluations by the compliance assessment component 1406 can occur in accordance with a predefined schedule, in response to a modification to the application 1400, in response to a reprovisioning of resources for the application by a service provider such as a cloud computing service provider, or based on any other suitable trigger. Thus a cycle of evaluating a level or extent of compliance and enforcing compliance via the application modifier 1468 can ensure an ongoing and up-to-date assessment and enforcement of the compliance characteristic 1412. This is particularly advantageous where the application 1400 is deployed to a service based environment or infrastructure which exhibits characteristics of elasticity in resource provisioning.

While the arrangement of Figure 10 shows the compliance determination component 1470 being comprised within the compliance assessment component 1406 and the application modifier 1468 being comprised in the compliance component 1408, it will be appreciated that such an arrangement is purely exemplary. The compliance determination component 1470 and/or the application modifier 1468 can be is associated with, or included in, the compliance software component 1408 or a compliance software component cooperating with the component 1408. In an exemplary embodiment the coriipliance assessment component 1406 is operable to communicate the compliance criterion 1414 to the compliance component 1408 such that the compliance component 1408 is operable to determine the extent of the set 1460 of compliant resource states. It will be appreciated that multiple compliance components can be employed and accordingly the compliance criterion 1414, or information about the compliance criterion 1414, can be shared with and between such multiple compliance components. This is particularly advantageous where compliance components are distributed in association with resources throughout the deployed application 1400 such that different compliance components collect data from, and/or undertake enforcement operations in respect of, different resources.

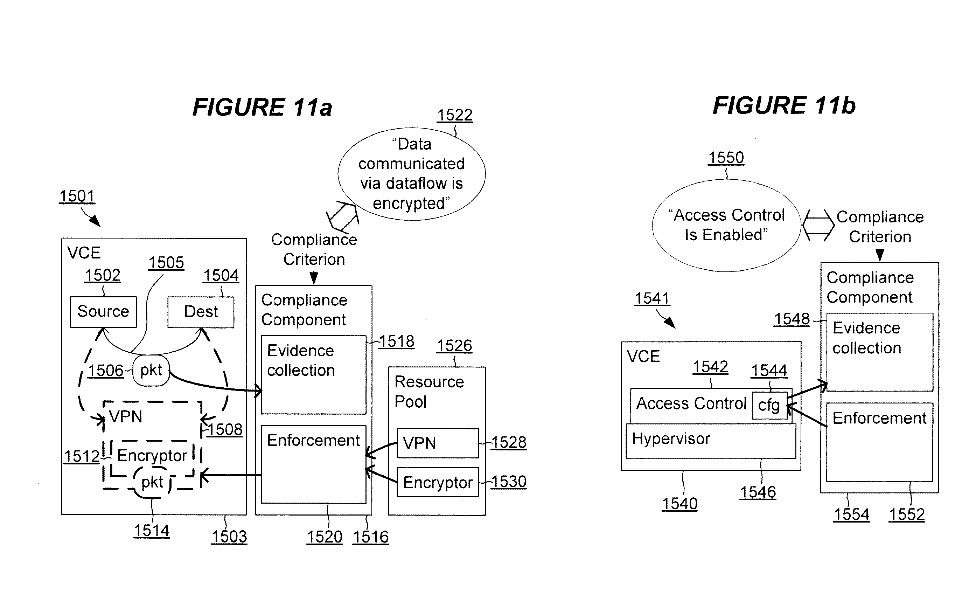

Figure 11a is a first exemplary component diagram illustrating a compliance enforcement process in use for an exemplary application 1501 deployed with a virtual computing environment 1503 in accordance with an exemplary embodiment of the present invention. The application 1501 includes a source resource 1502, such as a first software component, communicating via a dataflow resource 1505 with a destination resource 1504, such as a second software component The dataflow 1505 is illustrated as linking the source 1502 and destination 1504 and has a packet 1506 of information illustrated in communication via the dataflow 1505'. A compliance component 1516 includes an evidence collection module 1518 and an enforcement module 1520. The compliance component 1516 receives a compliance criterion or information about a compliance criterion. In the illustrative arrangement of Figure 11a the compliance criterion is defined as "packets communicated via the dataflow 1505 must be encrypted". Thus the compliance criterion defines a set 1522 of compliant resource states for the dataflow 1505 including a state in which packet 1506 communicated via the dataflow 1505 is encrypted.

In use, the evidence collection module 1518 is operable to collect information about the packet 1506 from the application 1501. For example, evidence collection component 1518 is operable in a trusted mode of operation with respect to the application 1501 and/or the virtualised computing environment 1503 such that the module 1518 accesses one or more of, inter alia: the contents of the packet 1506; an interface of the source and/or destination resources 1502, 1504 through which requests can be communicated to the source and/or destination resources 1502, 1504; and configuration information relating to the source and/or destination resources 1502, 1504. Through the information accessible to the evidence collection component 1518 data is collected that can be used to generate evidence of a state of the dataflow 1505 and, in particular, a state of encryption of data communicated via the dataflow 1505. Subsequently, a compliance determination component (not illustrated in Figure 11a) determines if the state of the dataflow 1505 is within the set 1522 of compliant states. The compliance determination component may constitute part of the evidence collection component 1518, the compliance component 1516, the enforcement component 1520 or a compliance assessment component (not illustrated in Figure 11a) cooperating with the compliance component 1518.

The arrangement of Figure 11a illustrates the case where the state of the dataflow 1505 is not within the set 1522 of compliant states. Accordingly, the enforcement component 1520 is operable to modify the software application 1501 to include one or more resources with a state belonging to the set of compliant states 1522. The enforcement component 1520 includes an application modifier for retrieving new resources from a resource pool 1526 in order to modify the resources instantiated for the application 1501. In particular, the resource pool includes a virtual private network (VPN) resource 1528 and an encryptor resource 1530. The VPN 1528 is operable to provide a virtual network via which the dataflow 1505 can be passed such that virtual network is not visible to either the source or destination components 1502, 1504. The encryptor 1530 is a software component operable to receive unencrypted input data and provide encrypted output data. In use, the application modifier of the enforcement component 1520 modifies the application 1501 by channelling the dataflow 1505 through a new VPN resource 1508 such that a new encryptor resource 1512 can encrypt data communicated via the dataflow 1505. Accordingly packets 1514 communicated via the dataflow 1505 of the application 1501 after modification will be subject to the components of the application shown in broken lines.

Subsequently, the compliance component 1516 in conjunction with a compliance assessment component is operable to determine an extent or level of compliance of the modified application 1501. Such an assessment will determine that the dataflow resource 1505 has a state within the set 1522 of compliant states due to the modification of the application 1501 by the application modifier.

Figure 11b is a second exemplary component diagram illustrating a compliance enforcement process in use for an exemplary application 1541 deployed with a virtual computing environment 1540 in accordance with an exemplary embodiment of the present invention. The application 1541 includes a hypervisor resource 1546 having executing thereon an access coritrol resource 1542. The access control resource 1542 has associated a configuration 1544. A compliance component 1554 includes an evidence collection module 1548 and an enforcement module 1552. The compliance component 1554 receives a compliance criterion or information about a compliance criterion. In the illustrative arrangement of Figure 11b the compliance criterion is defined as "access control resources have a configuration that is enabled". Thus the compliance criterion defines a set 1550 of compliant resource states for the access control configuration 1544 including a state in which access control configuration 1544 is enabled.

In use, the evidence collection module 1548 is operable to collect information about the access control configuration 1544 from the application 1541. For example, evidence collection component 1548 is operable in a trusted mode of operation with respect to the application 1541 and/or the virtualised computing environment 1540 such that the module 1548 accesses one or more of, inter alia: the contents of the configuration 1544; an interface of the access control resource 1542 through which requests can be communicated regarding the configuration 1544; and the hypervisor 1546 through which requests can be communicated regarding the access control resource 1542 and/or the configuration 1544. Through the information accessible to the evidence collection component 1548 data is collected that can be used to generate evidence of a state of the access control configuration 1544 and, in particular, a state of enablement of the access control configuration 1544. Subsequently, a compliance determination component (not illustrated in Figure 11b) determines if the state of the access control configuration 1544 is within the set 1550 of compliant states.

Where a state of the access control configuration 1544 is not within the set 1550 of compliant states, the enforcement component 1552 is operable to modify the software application 1541 to include one or more resources with a state belonging to the set of compliant states 1550. In particular, the enforcement component 1552 includes an application modifier for directly modifying the access control configuration 1544 for the application 1541 such that the access control configuration 1544 is set to an enabled state.

Subsequently, the compliance component 1554 in conjunction with a compliance assessment component is operable to determine an extent or level of compliance of the modified application 1541. Such an assessment will determine that the access control configuration 1544 has a state within the set 1550 of compliant states due to the modification of the application 1541 by the application modifier.

In an extension to the exemplary arrangement of Figure 11b, the application 1541 is a web application allowing communication over transmission control protocol (TCP) ports 80 (normally reserved for hypertext transport protocol (HTTP) communications) and 21 (normally reserved for file transfer protocol (FTP) communications). While the application allows communication over both ports 80 and 21, the application 1541 provides a server or daemon process supporting HTTP on port 80, leaving port 21 unused but open for communication. Thus, port 80 is configured for communication while port 21 is not configured but is open for communication. In the extension to the exemplary embodiment the access control resource 1542 is a firewall resource providing network communication security facilities including allowing or preventing communication over defined network paths including TCP ports. In the extension to the exemplary embodiment the compliance criterion is further defined as "only configured TCP ports are open for communication". Thus, in the extension of the exemplary embodiment, the compliance criterion defines a set 1550 of compliant resource states for the access control configuration 1544 including a state in which access control configuration 1544 is operable to prevent communication via ports that are not configured. Thus, in use, the evidence collection component 1548 in the extended embodiment is operable, in conjunction with resources of the deployed application 1541, to determine which TCP ports are configured and which TCP ports are open for communication. This determination can be based on an inspection of a configuration of the application 1541 or by sending requests to an interface of resources for the application 1541. Alternatively, the determination can be based on measurements or testcases conducted by the evidence collection component 1548, such as a port scan to identify open TCP ports and a resource scan to identify which resources are operable with open TCP ports to determine configured ports. In the extended embodiment, if there are open TCP ports that are not configured then the enforcement component 1552 is operable to configure the proxy 1544 to prevent communication over non-configured ports. Thus the extended exemplary embodiment of Figure 11b illustrates an example in use for compliance assessment and enforcement.

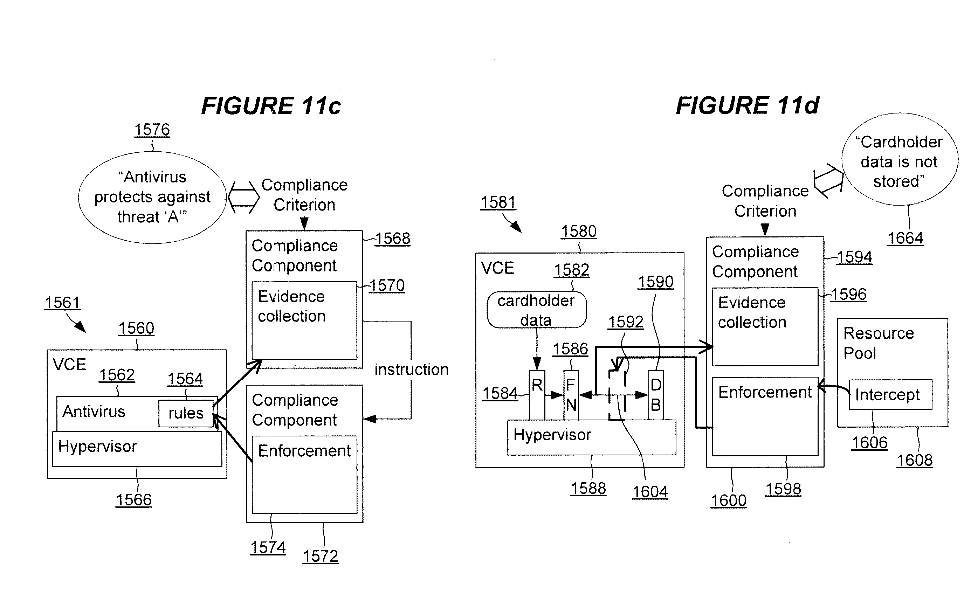

Figure 11c is a third exemplary component diagram illustrating a compliance enforcement process in use for an exemplary application 1561 deployed with a virtual computing environment 1560 in accordance with an exemplary embodiment of the present invention. The application 1561 includes a hypervisor resource 1566. having executing thereon an antivirus resource 1562. The antivirus resource 1562 has associated rules 1564 reflecting threats the antivirus resource 1562 is operable to protect against. A first compliance component 1568 includes an evidence collection module 1570. A second, separate, compliance component 1572 includes an enforcement module 1574. The first compliance component 1568 receives a compliance criterion or information about a compliance criterion. In the illustrative arrangement of Figure 11c the compliance criterion is defined as "antivirus resources protect against specific threat 'A'". Thus the compliance criterion defines a set 1576 of compliant resource states for the antivirus rules 1564 including a state in which the rules 1564 include protection against a-specific threat 'A'.

In use, the evidence collection module 1570 is operable to collect information about the antivirus rules 1564 from the application 1561. For example, evidence collection component 1570 is operable in a trusted mode of operation with respect to the application 1561 and/or the virtualised computing environment 1560 such that the module 1570 accesses one or more of, inter alia: the contents of the antivirus rules 1564; an interface of the antivirus resource 1562 through which requests can be communicated regarding the rules 1564; and the hypervisor 1566 through which requests can be communicated regarding the antivirus resource 1562 and/or the rules 1564. Through the information accessible to the evidence collection component 1570 data is collected that can be used to generate evidence of a state of the antivirus rules 1564 and, in particular, whether the rules 1564 include protection against specific threat 'A'. Subsequently, a compliance determination component (not illustrated in Figure 11c) determines if the state of the antivirus rules 1564 is within the set 1576 of compliant states.

Where a state of the antivirus rules 1564 is not within the set 1576 of compliant states, the first compliance component 1568 is operable to select the second compliance component 1572 for an enforcement operation. The selection of the second compliance component 1572 can be based on information provided by the second compliance component 1572 such as an indication by the second compliance component 1572 of functions and facilities provided by the second compliance component 1572. For example, the second compliance component 1572 can advertise resources of the application 1561 for which the second compliance component 1572 is operable to undertake enforcement operations. Such advertisement or communication of the capabilities of the second compliance component 1572 can be communicated to the first compliance component via a broadcast communication, a publish/subscribe mechanism, a request/response protocol or other suitable communication means. Thus, the first compliance component 1568 instructs the second compliance component 1572 to enforce the compliance criterion. The instruction will therefore include the compliance criterion, or information about the compliance criterion, such that the second compliance component has sufficient information to apply an appropriate enforcement action.

The enforcement component 1574 of the second compliance component 1572 includes an application modifier operable to modify the software application 1561 to include one or more resources with a state belonging to the set of compliant states 1576 in accordance with the instruction from the first compliance component 1568. For example, the enforcement component 1574 can include an application modifier for directly modifying the antivirus rules 1564 such that rules protection against threat 'A' are provided. Alternatively, the application modifier can be operable to instruct the antivirus resource 1562 to undertake an upgrade, update, reinstall or other operation suitable to retrieving new or additional rules 1564. In a further alternative, the application modifier can be operable to retrieve a new resource suitable for providing antivirus functionality and including protection against threat 'A'.

Subsequently, the compliance component 1568 in conjunction with a compliance assessment component is operable to determine an extent or level of compliance of the modified application 1561. Such an assessment will determine that the antivirus rules 1564 have a state within the set 1576 of compliant states due to the modification of the application 1561 by the application modifier.

Figure 11d is a fourth exemplary component diagram illustrating a compliance enforcement process in use for an exemplary application 1581 deployed with a virtual computing environment 1580 in accordance with an exemplary embodiment of the present invention. The application 1581 includes a hypervisor 1588 having executing thereon: a receiver software resource 1584; an application function software resource 1586; and a database resource 1590. In operation the application 1581 receives cardholder data 1582 at the receiver 1584 such as credit card information for a cardholder. The receiver 1584 communicates the cardholder data to the application function 1586 which in turn accesses the database 1590 via dataflow 1604 for the storage and retrieval of information. A compliance component 1594 includes an evidence collection module 1596 and an enforcement module 1598. The compliance component 1596 receives a compliance criterion or information about a compliance criterion. In the illustrative arrangement of Figure 11d the compliance criterion is defined as "cardholder data 1582 is not stored". Thus the compliance criterion defines a set 1664 of compliant resource states for the dataflow 1604 including a state in which information communicated for storage to the database 1590 via the dataflow 1604 does not include cardholder data 1582.

In use, the evidence collection module 1596 is operable to collect information about the dataflow 1604 from the application 1581. For example, evidence collection component 1596 is operable in a trusted mode of operation with respect to the application 1581 and/or the virtualised computing environment 1580 such that the module 1518 accesses one or more of, inter alia: the contents of data communicated via the dataflow 1604; an interface of the application function 1586 and/or the database 1590 through which requests can be communicated; and the contents of the cardholder data 1582 accessed directly or via the receiver 1584 or the application function 1586. Through the information accessible to the evidence collection module 1596 data is collected that can be used to generate evidence of a state of the dataflow 1604 and, in particular, a state of the contents of data communicated over the dataflow 1604 in respect of the cardholder data 1582. Subsequently, a compliance determination component (not illustrated in Figure 11d) determines if the state of the dataflow 1604 is within the set 1664 of compliant states.

The arrangement of Figure 11d illustrates the case where the state of the dataflow 1604 is not within the set 1664 of compliant states. Accordingly, the enforcement component 1598 is operable to modify the software application 1581 to include one or more resources with a state belonging to the set of compliant states 1664. The enforcement component 1598 includes an application modifier for retrieving new resources from a resource pool 1608 in order to modify the resources instantiated for the application 1581. In particular, the resource pool includes an intercept resource 1606 such as a dataflow proxy, software route or other software component operable to intercept communication across a dataflow such as dataflow 1604. In use, the application modifier of the enforcement component 1598 modifies the application 1581 by introducing the interceptor resource 1606 as a new resource 1592 in the application 1581 to intercept all communications between the application function 1586 and the database 1590. The new resource 1592 is further operable to redact, excise, remove, overwrite or otherwise remove any data originating from cardholder data 1582 communicated via the dataflow 1604. Accordingly information communicated via the dataflow 1604 of the application 1581 after modification will be subject to the components of the application shown in broken lines in Figure 11d. The removal of cardholder data from information communicated via the dataflow 1604 will preclude the storage of cardholder data in the data store 1590.

Subsequently, the compliance component 1594 in conjunction with a compliance assessment component is operable to determine an extent or level of compliance of the modified application 1581. Such an assessment will determine that the dataflow resource 1604 has a state within the set 1664 of compliant states due to the modification of the application 1581 by the application modifier.

Thus an application can be transitioned to a compliant state by modification of the application by an application modifier. Further, operation of at least a compliance determination component and an application modifier can be repeated in response to changes to the application or one or more resources instantiated for the application, such as a reprovisioning of laas, PaaS or cloud computing resources for the application. Thus compliance can be assessed and enforced for applications operating with environments exhibiting characteristics of elasticity.

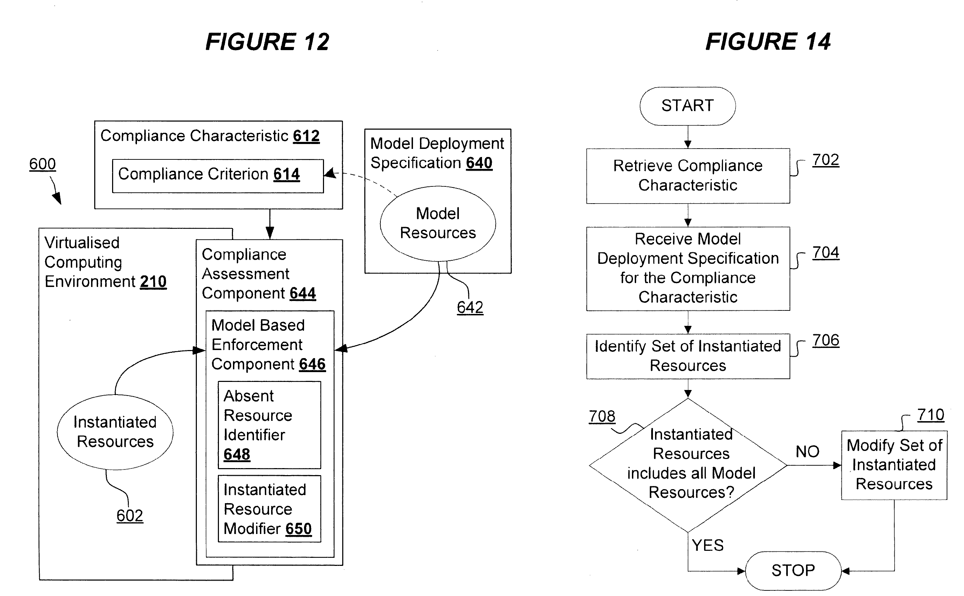

Figure 12 is a component diagram of a compliance enforcement process for enforcing a model deployment specification 640 in accordance with a preferred embodiment of the present invention. The model deployment specification 640 identifies a set 642 of model resources being selected to satisfy a compliance criterion 614 for a compliance characteristic 612. The selection of the model resources 642 can be predetermined, such as by being provided by an operator, and/or the model resources 642 can be adapted in response to compliance assessments by a compliance determination component 670 as described below. Thus, the model deployment specification 640 constitutes a model of a best practice, commonly accepted, effective or otherwise reliable specification for the deployment of a set of model resources 642 being selected for satisfying the compliance criterion 614. It will be appreciated that while the set of model resources 642 are selected to satisfy the compliance criterion 614, on instantiation of the set of model compliance resources 642 a state of satisfaction of the compliance criterion 614 is not guaranteed. Reasons for a deployment of the model resources 642 not satisfying the compliance criterion 614 include, inter alia: changes to the compliance criterion 614 of the compliance characteristic 612; interactions of the model resources 642 with other resources deployed for a software application 600; interactions of a configuration of the model resources 642 with a configuration of other resources deployed for the software application 600; and factors specific to the application 600, the virtualised computing environment 210 and/or hardware devices working with the virtualised computing environment 210 that lead to unpredictable results of the operation of the model resources 642, such as revisions, updates, upgrades, redeployments or reprovisioning.

While the model deployment specification 640 is illustrated with reference to a single compliance characteristic 612 having a single criterion 614, it will be appreciated that the model deployment specification could equally include a set of model resources 642 selected to satisfy multiple compliance criteria for potentially multiple compliance characteristics.

The application 600 is a software application deployed for execution with the virtualised computing environment 210 including a set 602 of resources instantiated for execution of the application 600. Notably, the instantiated resources 602 and the model resources 642 include one or more of, inter alia: software components; hardware coponents; dataflows; technologies; and configurations of software components, dataflows or technologies. Thus, while a network connection is a resource, similarly a particular configuration of the network connection is also a resource, such as an encryption function of the network resource, a packet size for the network resource, a particular set of protocols supports by the network resource etc.

A compliance assessment component 644 includes a model based enforcement component 646 as a hardware or software component for enforcing the model deployment specification 640 for the deployed application 600. The model based enforcement component 646 includes an absent resource identifier 648 and an instantiated resource modifier 650. The absent resource identifier 648 is operable to determine if the set of instantiated resources 602 includes all resources in the set of model resources 642. Thus, the absent resource identifier 648 determines if the set of model resources 642 includes absent resources as resources outside the set of instantiated resources 602. The absent resource identifier 648 or the model based enforcement component 646 are operable to identify the set 602 of instantiated resources for the application 600. For example, the instantiated resources 602 can be identified based on one or more of, inter alia: monitoring the application 600 or the virtualised computing environment 210; information obtained via interfaces or APIs of the application 600 or the virtualised computing environment 210; and/or a registry, library, resource list or other reference mechanism associated with the application 600 or the virtualised computing environment 210. Alternatively, the absent resource identifier 648 can determine the set of instantiated resources 602 based on an examination of the virtualised computing environment 210 including, for,example, process lists, registry entries, file lists, configuration information, network connections, interfaces and agents executing with the virtualised computing environment 210.

The instantiated resource modifier 650 is operable in response to the determination of the absent resource identifier 648. Where the absent resource identifier 648 determines that the set of instantiated resources 602 does not include all of the resources in the set of model resources 642, the instantiated resource modifier 650 is operable to identify resources in the set of model resources 642 not instantiated in the set of instantiated resource 602. These identified resources are considered 'absent resources'. The instantiated resource modifier 650 is further operable to modify the set of instantiated resources 602 by instantiating the absent resources such that the set of instantiated resources 602 includes all the resources in the set of model resources 642. The instantiation of the absent resources can include, inter alia: the execution of a new resource; the reconfiguration of an existing resource; the replacement of an existing resource with a new resource; and/or the modification of an existing resource. Thus by instantiating all the resources in the set of model resources 642 the set of instantiated resources 602 includes resources selected to satisfy the compliance criterion 614. In this way the model deployment specification 640 can be applied to the application 600 at execution time as a means of enforcing the compliance requirements defined by the compliance characteristic 612 and associated criterion 614.

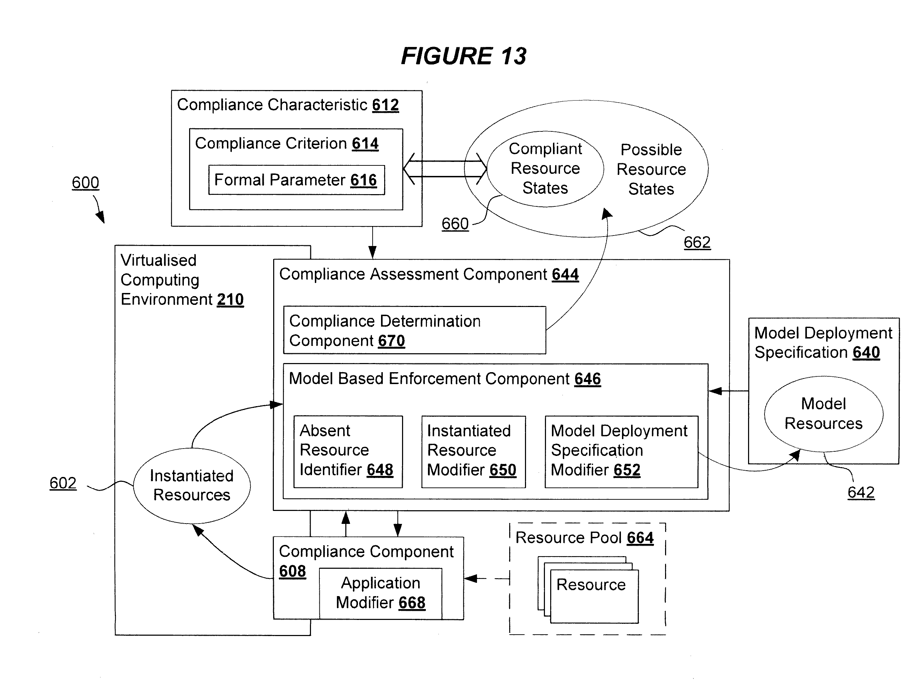

Figure 13 is a detailed component diagram of a compliance enforcement process for enforcing a model deployment specification 640 in accordance with a preferred embodiment of the present invention. Many of the features of Figure 13 are identical to those described above with respect to Figures 10 and 12 and these will not be repeated in detail here. In addition to the features in the arrangement of Figure 12, Figure 13 includes the compliance criterion 614 being based on a formal parameter 616 and the compliance criterion 614 defining a set of compliant resource states. The compliance assessment component 644 further includes a compliance determination component 670 such as was described above with respect to Figure 10. In the arrangement of Figure 13 the compliance assessment component 644 selects a compliance component 608 for providing an actual parameter corresponding to the formal parameter 616. The actual parameter is based on data concerning one or more of the resources in the set of instantiated resources 602 such that an evaluation of the compliance criterion 614 can be undertaken by the compliance determination component 670.

In the arrangement of Figure 13, as in the arrangement of Figure 10, an application modifier 668 is operable to modify the application 600 where the compliance determination component 670 determines that a state of the application characterised by a state of the set of instantiated resources 602 is outside the set of compliant resource states 660. The application modifier 668 modifies the set of instantiated resources 602 to provide a modified set of instantiated resources 602 with a state belonging to the set of compliant resource states 660.

The model based enforcement component 646 of Figure 13 additionally includes a model deployment specification modifier 652 as a software or hardware component for modifying the model deployment specification 640. The model deployment specification modifier 652 is operable responsive to the instantiated resource modifier 650 such that modifications to the instantiated resources 602 to enforce compliance with the compliance characteristic 612 are reflected in the model deployment specification 640 by modifications to the model resources 642. While the set of model resources 642 are selected to satisfy the compliance criterion 614, there are numerous reasons outlined above why such satisfaction is not guaranteed. Accordingly, where the application 600, as modified for consistency with the model deployment specification 640 as described with respect to Figure 12, exhibits non-compliance as determined by the compliance determination component 670, then consequent modifications to the instantiated resources 602 are reflected by corresponding modifications to the model resources 642. Thus, in this way, the model deployment specification 640 is continually monitored and updated in response to runtime assessments of the effectiveness of the model deployment specification 640 by assessing compliance of applications conforming to the model deployment specification 640 and enforcing compliance through application modification.

Figure 14 is a flowchart of a method for enforcing a model deployment specification 640 in accordance with a preferred embodiment of the present invention. At step 702 the compliance assessment component 644 retrieves the compliance characteristic 612 including the compliance criterion 614. At step 704 the model based enforcement component 646 receives the model deployment specification 640 including an identification of a set of model resources 642 corresponding to the compliance criterion 614. At step 706 the absent resource identifier 648 or the model based enforcement component 646 identifies the set of instantiated resources 602. At step 708 the absent resource identifier 648 determines if the set of model resources 642 includes absent resources outside, the set of instantiated resources 602. Where absent resources are identifies, the instantiated resource modifier 650 modifies the set of instantiated resources 602 at step 10.

The virtualised computing environment 210 with which the application 60,0 is deployed can exhibit elastic characteristics such that a configuration, structure, organisation or implementation of the virtualised computing environment 210 can change at a runtime of the application. Further, the elastic characteristics can be exhibited as a change to the type, implementation or configuration of resources instantiated within the virtualised computing environment 210, or as a removal, replacement or addition of resources in the set of instantiated resources 602 for the application. Such changes can be generally considered a reprovisioning of infrastructure or resources for the application. In a preferred embodiment the compliance assessment component 644 is operable to identify a reprovisioning for the application 600 such as by identifying changes to the resources 602 instantiated for the application 600. In response to the identification of reprovisioning, the steps 706 to 710 described above are preferably repeated to reassess whether the instantiated resources 602 continue to correspond to the model resources 642. Additionally, in a preferred embodiment, in further response to the identification of reprovisioning, the operation of the compliance determination component 670 is repeated to determine if the reprovisioned. application satisfies the compliance criterion 614, and the application modifier 668 and model deployment specification modifier 652 are further operable to modify the set of instantiated resources 602 and the model resources 642 accordingly. Thus, in this way embodiments of the present invention provide for the enforcement and refinement of a model deployment specification 640 even in view of the elasticity characteristics of virtualised computing environments such as cloud computing environments at a runtime of an application 600 in execution.

The broker 610 further includes a detector operable at runtime to detect such changes to the resources or virtual computing environments and, in response to the detection of a change, the operation of the receiver 612 and the selector 614 as described above is repeated such that a new deployment configuration is selected. In a preferred embodiment the new deployment configuration is further used to generate new deployment specifications 616 such that the deployment of the application can be dynamically altered, modified or transitioned at runtime in response to any reprovisioning for the application.

In accordance with embodiments of the present invention, the identified extent or level of compliance is suitable for affecting the operation of the application when deployed and the configuration of a virtualised computing environment. Embodiments of the present invention provide a compliance enforcement function where compliance requirements defining technical requirements of an application are imposed on the application automatically at runtime of the application based on an assessment of a level or extent of compliance of the application according to embodiments of the present invention. Yet further, embodiments of the present invention cant be operable to provide safety, security, reliability and/or stability features of an application by assessing a level or extent of compliance of the application with technical compliance requirements for assuring a predefined level of safety, security, reliability and/or/stability and indicating such level to inform a determination of future operation and/or to inform a compliance enforcement process. Thus applications that are safety critical, security critical or high-reliability critical can be monitored and affected using the approaches described with respect to embodiments of the present invention.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claim.

## Claims

1. A method for enforcing a model deployment specification for a software application in execution in a virtualised computing environment, the method comprising:
retrieving a compliance characteristic for the application, the compliance characteristic having associated a compliance criterion;
receiving a model deployment specification for the compliance characteristic, the model deployment specification including an identification of a set of model resources being selected to, when instantiated, satisfy the compliance criterion;
identifying a set of instantiated resources as resources instantiated for execution of the application;
in response to a determination that the set of model resources includes absent resources as resources outside the set of instantiated resources, modifying the set of instantiated resources by instantiating the absent resources for execution of the application such that the absent resources are included in the set of instantiated resources.

2. The method of claim 1 wherein the compliance criterion is based on a formal parameter and the compliance criterion defines a set of compliant resource states for the set of instantiated resources, and the method further comprising:
selecting a software component for providing an actual parameter corresponding to the formal parameter, the actual parameter being based on data concerning one or more resources in the set of instantiated resources;
evaluating the compliance criterion using the actual parameter to determine a state of the set of instantiated resources;
in response to a second determination that a state of the set of instantiated resources is outside the set of compliant resource states, modifying the set of instantiated resources to provide a modified set of instantiated resources having associated resources with a state belonging to the set of compliant resource states.

3. The method of claim 2 wherein the selection of the software component is based on an identification of one or more data items that the software component is operable to provide.

4. The method of any of claims 2 or 3 further comprising:
modifying the model deployment specification in accordance with the set of instantiated resources modified in response to the second determination.

5. The method of any preceding claim further comprising, in response to a determination that the set of instantiated resources is changed, repeating at least the identifying and modifying steps.

6. The method of any preceding claim wherein each resource in each of the sets of model resources and instantiated resources includes one or more of: an identification of a software component; an identification of a dataflow; a configuration of a software component; and a configuration of a dataflow.

7. The method of claim 6 wherein at least one of the absent resources includes a configuration of a software component, and wherein instantiating the at least one absent resource includes modifying a configuration of a software component in the instantiated set of resources.

8. Apparatus for enforcing a model deployment specification for a software application in execution in a virtualised computing environment, the apparatus comprising:
a compliance assessment component operable to retrieve a compliance characteristic for the application, the compliance characteristic having associated a compliance criterion;
a model based enforcement component operable to receive a model deployment specification for the compliance characteristic, the model deployment specification including an identification of a set of model resources being selected to, when instantiated, satisfy the compliance criterion;
an absent resource identifier component operable to identifying a set of instantiated resources as resources instantiated for execution of the application, the absent resource identifier component being further operable to determine if a set of model resources includes absent resources as resources outside the set of instantiated resources; and
an instantiated resource modifier component operable to modify the set of instantiated resources by instantiating the absent resources for execution of the application such that the absent resources are included in the set of instantiated resources.

9. The apparatus of claim 8 wherein the compliance criterion is based on a formal parameter and the compliance criterion defines a set of compliant resource states for the set of instantiated resources, and the apparatus further comprising:
a selector component operable to select a software component for providing an actual parameter corresponding to the formal parameter, the actual parameter being based on data concerning one or more resources in the set of instantiated resources;
an evaluator operable to evaluate the compliance criterion using the actual parameter to determine a state of the set of instantiated resources;
a compliance determination component operable to determine if a state of the set of instantiated resources is outside the set of compliant resource states;
an application modifier component for modifying the set of instantiated resources to provide a modified set of instantiated resources having associated resources with a state belonging to the set of compliant resource states.

10. The apparatus of claim 9 wherein the selection of the software component is based on an identification of one or more data items that the software component is operable to provide.

11. The apparatus of any of claims 9 or 10 further comprising:
a model deployment specification modifier component operable to modify the model deployment specification in accordance with the set of instantiated resources modified in response to the second determination.

12. The apparatus of any of claims 8 to 11 wherein each resource in each of the sets of model resources and instantiated resources includes one or more of: an identification of a software component; an identification of a dataflow; a configuration of a software component; and a configuration of a dataflow.

13. The apparatus of claim 12 wherein at least one of the absent resources includes a configuration of a software component, and wherein instantiating the at least one absent resource includes modifying a configuration of a software component in the instantiated set of resources.

14. A computer program element comprising computer program code to, when loaded into a computer system and executed thereon, cause the computer to perform the steps of a method as claimed in any of claims 1 to 7.
